Europäisches Patentamt

European Patent Office

Office européen des brevets

(19)

(11) **EP 1 451 029 B1**

(12) **FASCICULE DE BREVET EUROPEEN**

(45) Date de publication et mention
de la délivrance du brevet:
**26.10.2005 Bulletin 2005/43**

(21) Numéro de dépôt: **02785599.8**

(22) Date de dépôt: **07.11.2002**

(51) Int Cl.⁷: **B60G 17/015**

(86) Numéro de dépôt international:
**PCT/FR2002/003822**

(87) Numéro de publication internationale:
**WO 2003/045718 (05.06.2003 Gazette 2003/23)**

(54) **PROCEDE POUR EVALUER LA FREQUENCE INSTANTANEE D'UNE EXCITATION MECANIQUE EXERCEE SUR UNE ROUE D'UN VEHICULE AUTOMOBILE, ET APPLICATIONS**

**VERFAHREN ZUR SCHÄTZUNG DER MOMENTANEN FREQUENZ EINER MECHANISCHEN ANREGUNG, DIE AUF EIN KFZ-RAD WIRKT, UND ANWENDUNGEN**

**METHOD FOR EVALUATING INSTANTANEOUS FREQUENCY OF A MECHANICAL EXCITATION EXERTED ON A MOTOR VEHICLE WHEEL, AND APPLICATIONS**

(84) Etats contractants désignés:
**AT BE BG CH CY CZ DE DK EE ES FI FR GB GR
IE IT LI LU MC NL PT SE SK TR**

(30) Priorité: **28.11.2001 FR 0115385**

(43) Date de publication de la demande:
**01.09.2004 Bulletin 2004/36**

(73) Titulaire: **Peugeot Citroen Automobiles SA
92200 Neuilly sur Seine (FR)**

(72) Inventeurs:
• **GOURIET, Pascal
F-92320 Chatillon (FR)**
• **DJAMA, Zahir
F-75015 Paris (FR)**

(74) Mandataire: **Thinat, Michel
Cabinet Weinstein,
56 A, rue du Faubourg Saint-Honoré
75008 Paris (FR)**

(56) Documents cités:
EP-A- 0 743 204          EP-A- 0 747 691
WO-A-97/30858            FR-A- 2 683 185
FR-A- 2 683 776          FR-A- 2 719 260
FR-A- 2 787 066          US-A- 4 616 848
US-A- 4 634 142          US-A- 6 142 026
US-A- 6 164 665          US-A1- 2001 044 685

**Description**

La présente invention concerne, de façon générale, les techniques de traitement de signal et leur application au contrôle et / ou à la commande du comportement dynamique d'un véhicule automobile.

Plus précisément, l'invention concerne, selon un premier de ses aspects, un procédé pour évaluer la fréquence instantanée d'une excitation mécanique exercée, par des inégalités d'une voie de circulation, sur une roue d'un véhicule automobile circulant sur cette voie et doté d'un châssis relié à la roue par des organes de suspension, ce procédé incluant une procédure d'acquisition comprenant l'élaboration d'au moins une première séquence temporelle de mesure, constituée par des échantillons de mesure successifs représentant des valeurs successives prises par un premier paramètre observable lié à l'altitude instantanée du châssis et / ou de la roue.

Des procédés de ce type sont connus dans l'art antérieur, comme en témoignent notamment les documents de brevets FR - 2 683 776, FR - 2 787 066, FR - 2 719 260, EP - 0 743 204, et US - 5 497 324.

Le document de brevet FR - 2 683 776 propose un procédé d'obtention d'un signal représentant la surface de la chaussée en temps réel, ce procédé reposant sur une détection des déplacements relatifs mesurés par un capteur sensible au débattement de la carrosserie par rapport à au moins une roue (course de ressort).

Le signal représentatif du profil de la chaussée est obtenu par filtrage.

Des méthodes classiques, telles que la transformation de Fourier rapide (FFT), sont ensuite appliquées pour l'analyse spectrale du signal filtré et le calcul des valeurs moyennes et des dispersions, sur la base d'une classification prenant en compte des caractéristiques appropriées liées notamment au profil et au type de chaussée.

Ce procédé, qui ne peut ni traiter les bruits de mesure ni permettre une localisation temporelle des fréquences détectées, présente des limitations intrinsèques de précision.

Le document de brevet FR - 2 787 066 concerne un système de suspension actif comprenant des groupes d'appui actifs disposés entre la carrosserie et les roues du véhicule.

Chacun de ces groupes est constitué d'un ressort passif et d'un organe de réglage à possibilité de course, monté en série sur le ressort passif correspondant.

Ces groupes sont commandés en fonction des accélérations imposées à la carrosserie, un filtrage passe-bas appliqué aux signaux fournis par des accéléromètres et des capteurs de débattement permettant de prendre en compte, de façon différenciée, les composantes hautes fréquences et basses fréquences.

Un amortissement dépendant de la fréquence est obtenu par modulation en fréquence des signaux des accélérations de course, cette modulation résultant de l'effet combiné d'un filtre passe-bas, d'un amplificateur et d'un sommateur.

Cette technique présente plusieurs limitations et défauts spécifiques.

Tout d'abord, elle néglige le retard qui sépare l'instant où le capteur d'accélération détecte le mouvement de la carrosserie et l'instant où se produit l'excitation qui engendre ce mouvement de la carrosserie, de sorte que la fréquence estimée par modulation est entachée d'une erreur systématique.

D'autre part, cette technique est impropre à permettre une identification et une localisation temporelle de la fréquence instantanée.

Enfin, les fréquences des filtres sont choisies a priori, sur une base théorique, donc non susceptibles d'adaptation, et l'effet de l'amortisseur n'est pas traité dans certaines bandes de fréquences.

Le document de brevet FR - 2 719 260 décrit un procédé pour commander des dispositifs de réglage d'amortisseurs en fonction d'un signal issu d'un capteur d'accélération.

Pour séparer le mode d'oscillation dû à la carrosserie du mode d'oscillation dû à la roue, ce signal est fractionné au moyen d'un filtrage passe-bas et d'un filtrage passe-bande, le filtrage passe-bas présentant une fréquence de coupure située entre 15 et 20Hz pour inclure la fréquence propre de vibration de la roue, et le filtrage passe-bande présentant une bande de largeur comprise entre 0.75 et 2,5 Hz, centrée sur une fréquence comprise entre 1,5 et 2Hz, pour rendre compte du mode d'oscillation dû à la carrosserie.

Les mêmes remarques peuvent être formulées que dans les cas précédents, cette technique ne permettant pas davantage de prendre en compte les erreurs de modèle ni les bruits de mesure.

Le document de brevet EP - 0 743 204 décrit un procédé de contrôle de châssis d'un véhicule, utilisant un traitement des signaux issus d'un capteur ABS pour construire un système d'observation permettant le contrôle et la commande des suspensions du véhicule.

Ce procédé repose sur l'idée que la vitesse de rotation de la roue est proportionnelle à la vitesse de course des suspensions (en expansion ou compression), pour exploiter l'hypothèse que les composantes fréquentielles des signaux de vitesse de roue et de course de suspensions sont les mêmes.

Ce procédé, qui utilise un filtrage passe-bas de fréquence de coupure de 1Hz pour le débattement de la caisse, et un filtrage passe-bas de fréquence de coupure de 10Hz pour le débattement de la roue, appellent les mêmes remarques que les procédés précédemment évoqués.

Le brevet US 5 497 324 propose un procédé basé sur l'utilisation de la vitesse de course des débattements entre la roue et la caisse pour l'observation d'une suspension semi-active.

L'observation de la fréquence est réalisée par la mesure du temps qui sépare deux changements de sens de la sollicitation de cette suspension, la période étant prise comme l'inverse de la fréquence à $2\pi$ prés.

Une demi-période de changement de signe égale à 500 ms est ainsi prise comme la manifestation du mode d'oscillation dû à la caisse, une demi-période de changement de signe égale à 50 ms est prise comme la manifestation du mode d'oscillation dû à la roue, et une demie période de durée intermédiaire est prise comme la manifestation d'un mode d'oscillation lié au confort.

Or, dans la mesure où, dans le cas général, la fréquence d'excitation au niveau du sol a déjà évolué à l'instant où le capteur détecte un mouvement de la caisse ou de la roue, ce procédé comporte une erreur systématique.

D'autre part, ce procédé n'est en théorie applicable qu'aux signaux sinusoïdaux non déphasés et aux signaux périodiques dont la fréquence ne varie pas instantanément.

Enfin, ce procédé appelle, pour ce qui concerne les bruits des capteurs et les erreurs de modélisation, les mêmes remarques que celles qui ont été formulées précédemment.

Dans ce contexte, l'invention a pour but de proposer un procédé qui permette d'évaluer, de façon plus précise et plus rigoureuse que dans l'art antérieur, la fréquence instantanée d'une excitation mécanique qu'exercent sur une roue d'un véhicule automobile les inégalités de la voie sur laquelle il circule.

A cette fin, le procédé de l'invention, par ailleurs conforme à la définition générique qu'en donne le préambule ci-dessus, est essentiellement caractérisé en ce qu'il comprend en outre :

- une procédure de filtrage utilisant au moins la première séquence temporelle de mesure pour produire au moins une première séquence temporelle principale dérivée, constituée par des estimations successives de l'altitude instantanée du châssis, et une deuxième séquence temporelle principale dérivée, constituée par des estimations successives de l'altitude instantanée de la roue,

- une procédure d'extraction de décalage temporel, utilisant au moins les première et deuxième séquences principales dérivées pour produire une séquence temporelle préparatoire, constituée par des valeurs estimées successives d'un décalage temporel instantané entre l'altitude instantanée du châssis et l'altitude instantanée de la roue, chaque valeur estimée du décalage temporel étant obtenue par optimisation d'au moins une fonction de corrélation des première et deuxième séquences temporelles principales dérivées, et

- une procédure d'estimation de fréquence, utilisant la séquence temporelle préparatoire pour produire une séquence temporelle finale, constituée par des valeurs estimées successives de la fréquence instantanée de l'excitation mécanique, chaque valeur de fréquence étant obtenue, dans une fenêtre temporelle d'observation définie par la valeur estimée correspondante du décalage temporel instantané, comme la fréquence pour laquelle ce décalage temporel instantané constitue un déphasage instantané.

S'il est utile d'intégrer les bruits de mesure et les erreurs de modélisation, la procédure de filtrage utilise au moins la première séquence temporelle de mesure pour produire une première séquence temporelle dérivée comprenant, en plus de la première séquence temporelle principale dérivée, une première séquence temporelle auxiliaire dérivée constituée par des valeurs de variance successives respectivement associées aux estimations de la première séquence temporelle principale dérivée, et une deuxième séquence temporelle dérivée comprenant, en plus de la deuxième séquence temporelle principale dérivée, une deuxième séquence temporelle auxiliaire dérivée constituée par des valeurs de variance successives respectivement associées aux estimations de la deuxième séquence temporelle principale dérivée, chaque valeur estimée du décalage temporel étant obtenue par optimisation d'au moins une fonction de corrélation des première et deuxième séquences temporelles dérivées.

Par exemple, certains au moins des échantillons de mesure élaborés au cours de la procédure d'acquisition et relatifs à un paramètre observable représentent un débattement relatif du châssis par rapport à la roue.

Cependant, certains au moins des échantillons de mesure élaborés au cours de la procédure d'acquisition et relatifs à un paramètre observable peuvent aussi représenter une accélération instantanée du châssis, ou de la roue.

La procédure d'acquisition peut comprendre l'élaboration d'au moins une deuxième séquence temporelle de mesure, constituée par des échantillons de mesure successifs représentant des valeurs successives prises par un second paramètre observable lié à l'altitude instantanée du châssis et / ou de la roue.

De préférence, le procédé de l'invention comprend une procédure préalable de modélisation comprenant, pour un modèle physique associé au système constitué par la roue, les organes de suspension et le châssis, l'élaboration d'une première fonction de transfert inverse prenant le premier paramètre observable pour signal d'entrée et l'altitude instantanée du châssis pour signal de sortie, et l'élaboration d'une deuxième fonction de transfert inverse prenant le premier paramètre observable pour signal d'entrée et l'altitude instantanée de la roue pour signal de sortie.

La procédure préalable de modélisation peut aussi comprendre, pour le modèle physique associé au système constitué par la roue, les organes de suspension et le châssis, l'élaboration d'une troisième fonction de transfert inverse prenant le second paramètre observable pour signal d'entrée et l'altitude instantanée du châssis pour signal de sortie, et l'élaboration d'une quatrième fonction de transfert inverse prenant le second paramètre observable pour signal d'entrée et l'altitude instantanée de la roue pour signal de sortie.

En variante, la procédure préalable de modélisation peut comprendre, pour le modèle physique associé au système constitué par la roue, les organes de suspension et le châssis, l'élaboration d'une cinquième fonction de transfert inverse prenant le second paramètre observable pour signal d'entrée et l'altitude instantanée du châssis ou de la roue pour signal de sortie, et l'élaboration d'une sixième fonction de transfert inverse prenant le second paramètre observable pour signal d'entrée et le premier paramètre observable pour signal de sortie.

Dans tous les cas, la procédure de filtrage est très avantageusement réalisée au moyen d'au moins un filtre de Kalman, et éventuellement au moyen de deux filtres de Kalman ou plus.

Chaque fonction de corrélation des première et deuxième séquences temporelles dérivées peut être constituée par une fonction d'inter-corrélation de ces première et deuxième séquences temporelles dérivées.

Cependant, chaque fonction de corrélation des première et deuxième séquences temporelles dérivées peut aussi être construite suivant un modèle de cumulants d'ordre 3.

Chaque fois que c'est possible, la procédure d'estimation de fréquence élabore par exemple chaque valeur de la séquence temporelle finale en tant que solution, pour la valeur estimée correspondante du déphasage instantané, d'au moins une équation représentant le modèle physique associé au système constitué par la roue, les organes de suspension et le châssis.

Dans les autres cas, la procédure d'estimation de fréquence peut élaborer chaque valeur de la séquence temporelle finale par application d'une transformée de Wigner-Ville ou d'une pseudo-transformée de Wigner-Ville.

Le procédé de l'invention trouve de nombreuses applications, et peut notamment être utilisé pour la commande des organes de suspension du véhicule, pour la détermination de l'inclinaison instantanée du châssis, pour la détermination des inégalités de la voie de circulation, pour la surveillance du gonflage de la roue, et la détermination de certaines caractéristiques des véhicules telles que le report de masse.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma représentant les éléments d'un sous-système modélisé constitué par un quart de véhicule;
- la figure 2 est un diagramme représentant l'évolution en amplitude de plusieurs fonctions de transfert en fonction de la fréquence;
- la figure 3 est un diagramme représentant l'évolution en phase de plusieurs fonctions de transfert en fonction de la fréquence;
- les figures 4A à 4C sont des diagrammes représentant trois variantes d'un premier mode de mise en oeuvre du procédé de l'invention;
- les figures 5A à 5C sont des diagrammes représentant trois variantes d'un second mode de mise en oeuvre du procédé de l'invention; et
- les figures 6A à 6C sont des diagrammes représentant trois variantes d'un troisième mode de mise en oeuvre du procédé de l'invention.

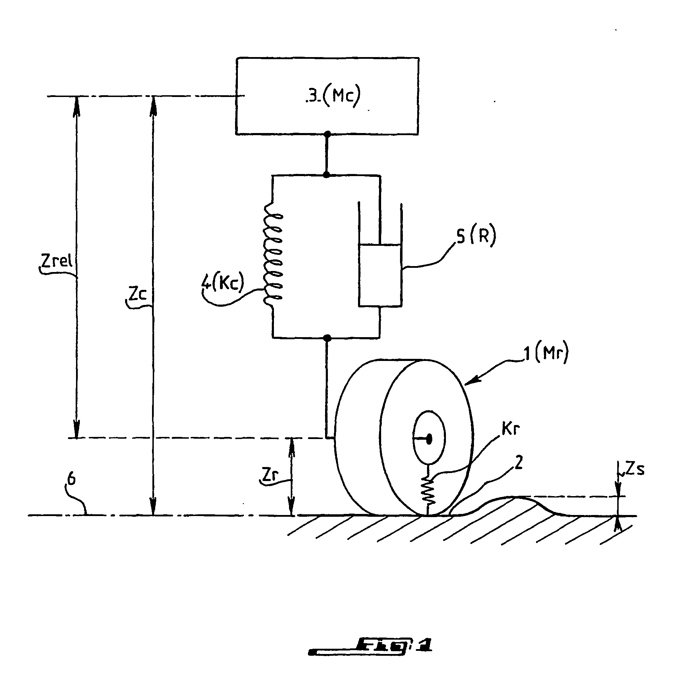

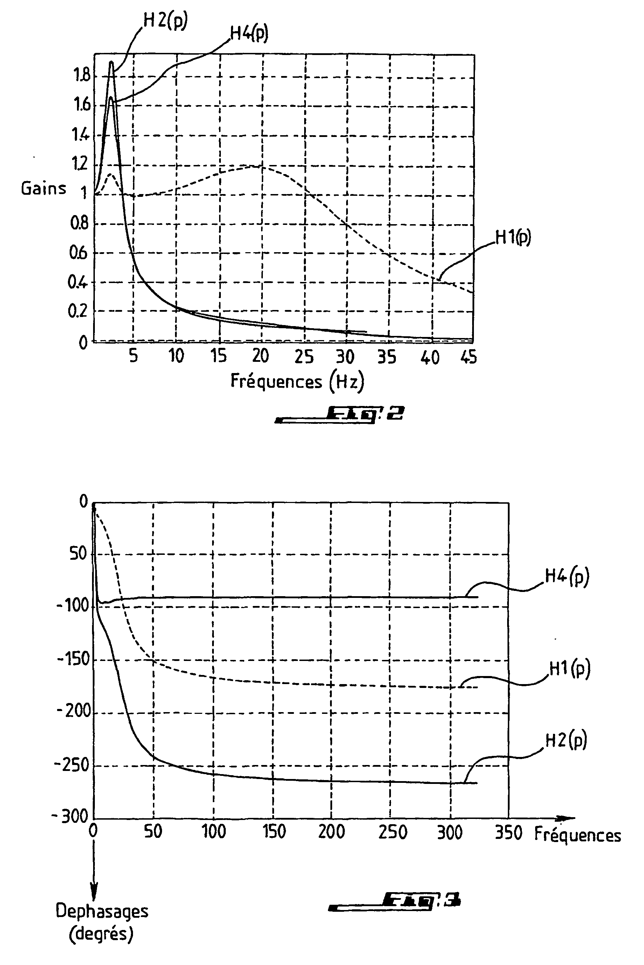

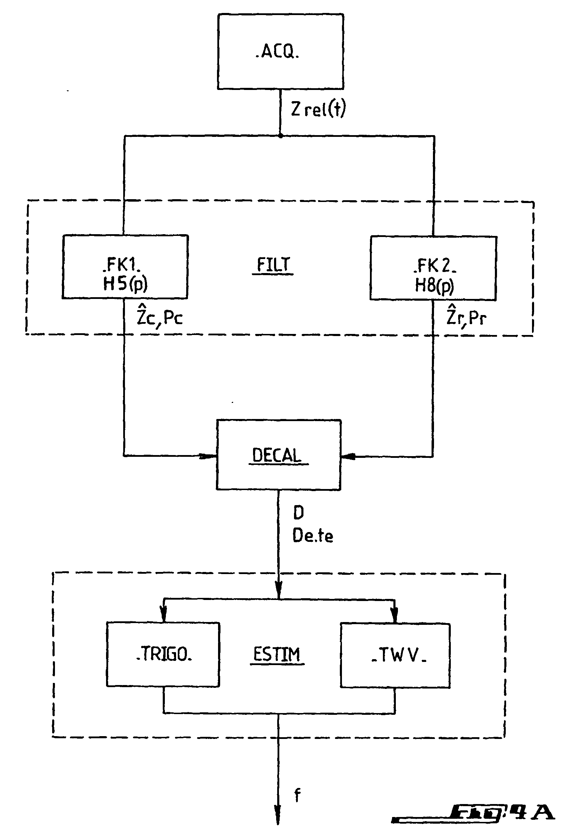

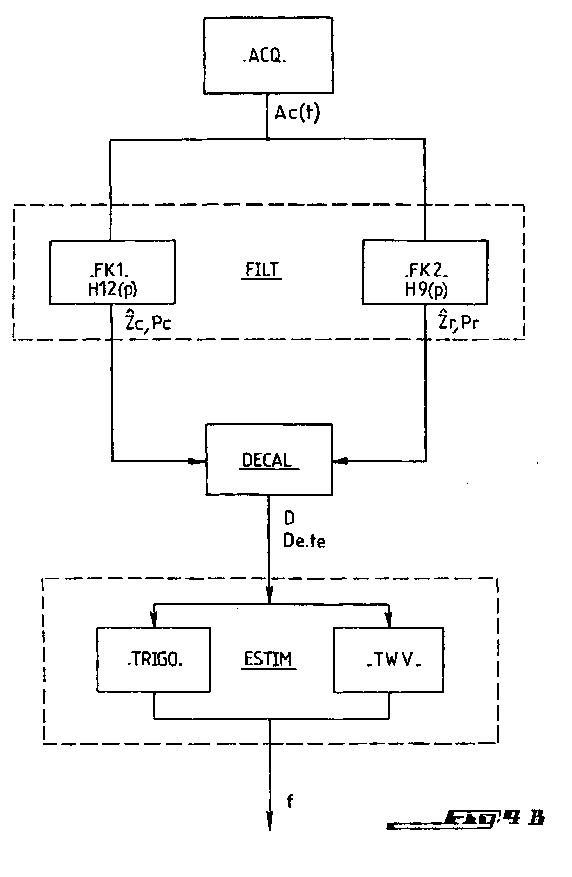

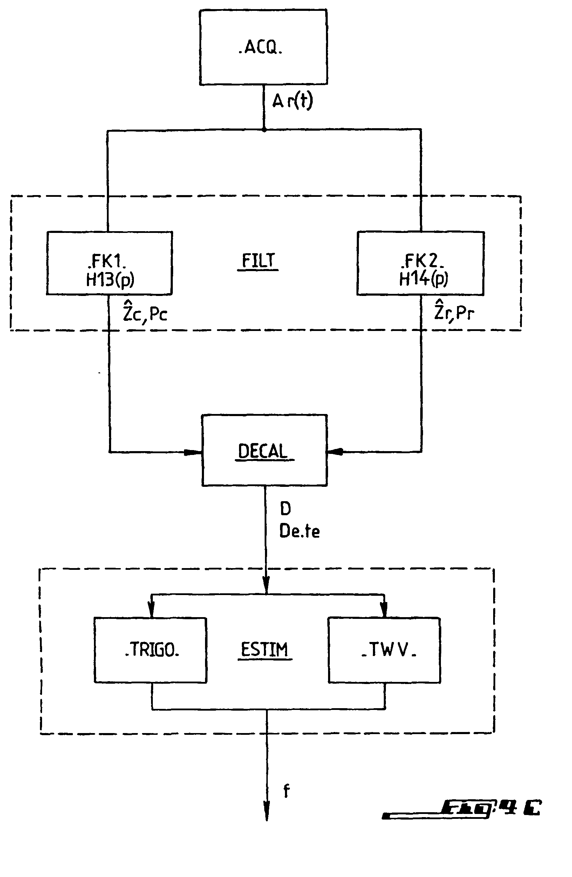

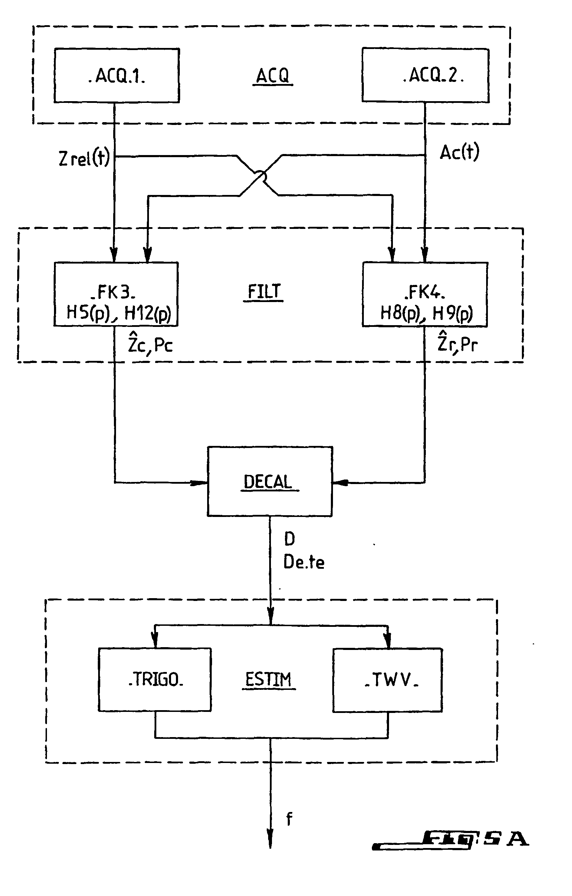

Comme indiqué précédemment, l'invention concerne un procédé pour évaluer la fréquence instantanée d'une excitation mécanique exercée sur une roue 1 (figure 1) d'un véhicule automobile circulant sur une route 2 et doté d'un châssis 3 relié à la roue 1 par des organes de suspension 4, 5.

On désigne en règle générale par "suspension" un ensemble formé par un ressort 4 et un amortisseur 5 et qui assure la liaison mécanique entre une masse suspendue, en substance le châssis 3 d'un véhicule, encore appelé "caisse", et une masse non-suspendue, par exemple une roue 1.

Le fonctionnement de ce type de suspension est entièrement dépendant de l'environnement dans lequel il évolue, et notamment du profil de la route.

Ainsi, les inégalités de la voie sur laquelle circule le véhicule exercent, sur chaque roue de ce dernier, une excitation mécanique dont le procédé de l'invention vise à évaluer la fréquence instantanée.

Le comportement qu'adopte, en réponse à cette excitation mécanique, le sous-système que forment ensemble une roue 1, les organes de suspension associés 4, 5, et la fraction du châssis 3 supportée par cette roue (figure 1), peut de façon bien connue en soi être décrit par un modèle physique à deux degrés de liberté faisant intervenir les paramètres physiques dont les symboles et définitions sont donnés ci-après :

$Mc$: masse du châssis supportée par la roue, exprimée en kilogrammes (kg);
$Mr$ : masse non suspendue (essentiellement de la roue), exprimée en kilogrammes (kg);
$Kc$ : raideur du ressort de suspension, exprimée en newtons par mètre (N.m$^{-1}$);
$Kr$ : raideur du pneu, exprimée en newtons par mètre (N.m$^{-1}$);
$R$ : coefficient d'amortissement de l'amortisseur, exprimé en newtons * seconde par mètre (N.m$^{-1}$.s);

$Zc$ : position verticale (altitude) instantanée du châssis, exprimée en millimètres (mm), par rapport à un plan horizontal de référence 6;

$Zr$ : position verticale (altitude) instantanée de la masse non suspendue, exprimée en millimètres (mm), par rapport au plan horizontal de référence 6;

$Zs$ : position verticale (altitude) instantanée du profil de la route, exprimée en millimètres (mm), par rapport au plan horizontal de référence 6;

$Ar$ : accélération verticale de la roue, exprimée en mètres par seconde carré (m.s$^{-2}$);

$Ac$ : accélération verticale du châssis, exprimée en mètres par seconde carré (m.s$^{-2}$).

Par souci de concision, la grandeur suivante sera également utilisée :

$Zrel$ : débattement relatif de la roue par rapport au châssis ($Zrel = Zr - Zc$).

L'application du principe de la dynamique aux composants de ce sous-système permet d'en construire, de façon connue, un modèle physique, et d'en déduire les fonctions de transfert, définies comme le rapport de la transformée de Laplace d'un premier paramètre physique considéré comme un signal d'entrée pour ce sous-système à la transformée de Laplace d'un second paramètre physique considéré comme un signal de sortie de ce sous-système.

En utilisant les notations répandues dans lesquelles le symbole $j$ désigne le nombre imaginaire racine de -1, dans lesquelles le symbole $\omega$ désigne la pulsation d'un signal périodique, liée à la fréquence $f$ de ce signal par la relation $\omega = 2\pi f$, dans lesquelles le symbole t désigne le temps, et dans lesquelles le symbole $p$ désigne à la fois l'opérateur de dérivation temporelle de la transformée de Laplace et le facteur $j.\omega$, c'est-à-dire le rapport de la dérivée temporelle de la fonction e $^{j.\omega.t}$ à cette fonction elle-même, il est ainsi possible de calculer notamment les fonctions de transfert suivantes :

$$H_1(p) = \frac{Zr(p)}{Zs(p)} = \frac{Kr(Mcp^2 + Rp + Kc)}{L(p)},$$

avec :

$$L(p) = MrMcp^4 + R(Mc + Mr)p^3 + (MrKc + Mc(Kr + Kc))p^2 + RKrp + KcKr \; ;$$

$$H_2(p) = \frac{Zc(p)}{Zs(p)} = \frac{Kr(Rp + Kc)}{L(p)},$$

et

$$H_3(p) = \frac{Ac(p)}{Zs(p)} = \frac{Kr.p^2.(Rp + Kc)}{L(p)}.$$

Dans ces exemples, la fonction de transfert $H_1(p)$ rend compte de la réponse en fréquence du sous-système modélisé, considérée comme exprimée par la position verticale instantanée de la roue ($Zr$), à l'excitation que constitue, pour ce sous-système, l'évolution verticale du profil de la route ($Zs$), cette fonction de transfert donnant une information sur la plus ou moins grande propension de la roue à rester en contact avec la route.

La fonction de transfert $H_2(p)$ rend compte de la réponse en fréquence du sous-système modélisé, considérée comme exprimée par la position verticale instantanée du châssis ($Zc$), à l'excitation que constitue, pour ce sous-système, l'évolution verticale du profil de la route ($Zs$), cette fonction de transfert donnant une information sur la plus ou moins grande propension du châssis à suivre le profil de la route.

Et la fonction de transfert $H_3(p)$ rend compte de la réponse en fréquence du sous-système modélisé, considérée comme exprimée par l'accélération verticale instantanée du châssis ($Ac$), à l'excitation que constitue, pour ce sous-système, l'évolution verticale du profil de la route ($Zs$), cette fonction de transfert donnant une information sur le confort des passagers installés dans l'habitacle solidaire du châssis.

D'autres fonctions de transfert utiles peuvent être calculées, et par exemple :

$$H_4(p) = \frac{Zc(p)}{Zr(p)} = \frac{(Kc + Rp)}{Mcp^2 + Rp + Kc}$$

$$H_5(p) = \frac{Zc(p)}{(Zr(p) - Zc(p))} = \frac{(Rp + Kc)}{Mcp^2}$$

$$H_6(p) = \frac{(Zr(p) - Zc(p))}{Ac(p)} = \frac{Mc}{(Rp + Kc)}$$

$$H_7(p) = \frac{(Zr(p) - Zc(p))}{Zs(p)} = \frac{H_2(p)}{H_5(p)}$$

$$H_8(p) = \frac{Zr(p)}{(Zr(p) - Zc(p))} = H_4^{-1}(p).H_5(p) = \frac{Mcp^2 + Rp + Kc}{Mcp^2}$$

$$H_9(p) = \frac{Zr(p)}{Ac(p)} = \frac{Mcp^2 + Rp + Kc}{p^2(Rp + Kc)}$$

$$H_{10}^{-1}(p) = \frac{Ar(p)}{Ac(p)} = \frac{Mcp^2 + Rp + Kc}{(Rp + Kc)}$$

$$H_{11}^{-1}(p) = \frac{Ar(p)}{(Zr(p) - Zc(p))} = \frac{Mcp^2 + Rp + Kc}{Mc}$$

$$H_{12} = \frac{Zc}{Ac} = \frac{1}{p^2}$$

$$H_{13}(p) = \frac{Zc}{Ar} = \frac{Kc + Rp}{p^2(Mcp^2 + R.p + Kc)}$$

$$H_{14}(p) = \frac{Zr}{Ar} = \frac{1}{p^2}$$

En connaissant les valeurs théoriques des différents paramètres physiques qui caractérisent le sous-système étudié, c'est-à-dire *Mc, Mr, Kc, Kr,* et *R,* il est ainsi possible de prévoir le comportement fréquentiel théorique de ce sous-système, dont rendent compte ces différentes fonctions de transfert.

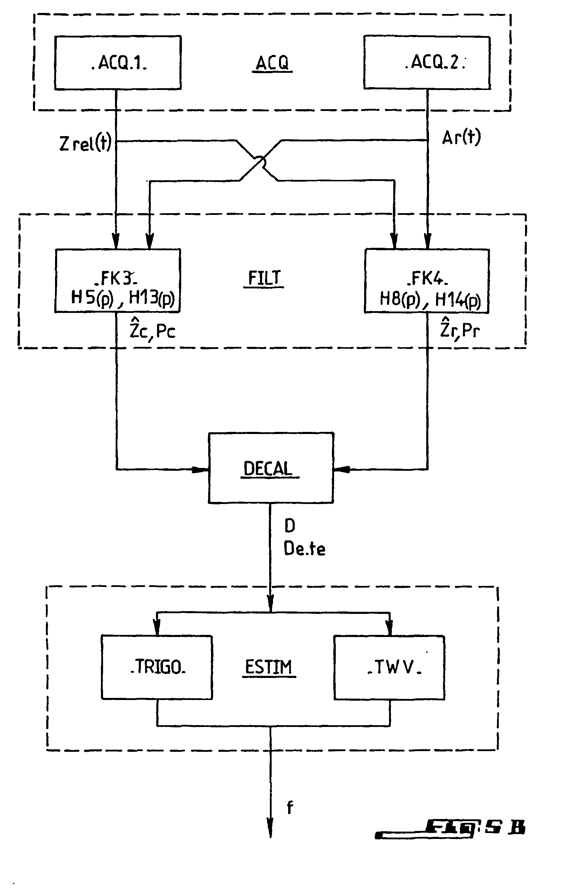

La figure 2 représente les amplitudes ou "gains" relatifs que prennent, en fonction de la fréquence de l'excitation produite par les inégalités de la route, c'est-à-dire du facteur $\omega / 2.\pi$, les différentes fonctions de transfert $H_4(p),$ $H_1(p),$ et $H_2(p)$.

L'examen de cette figure met en évidence deux fréquences de résonance, c'est-à-dire deux fréquences pour lesquelles ces gains sont supérieurs à l'unité.

Une première fréquence, dont la valeur $(1 / 2.\pi).(Kc / Mc)^{1/2}$ est relativement basse, correspond au mode d'oscillation dû à la carrosserie, dit encore "mode caisse".

Une seconde fréquence, dont la valeur $(1 / 2.\pi).(Kr / Mr)^{1/2}$ est relativement haute, correspond au mode d'oscillation dû à la masse non suspendue, dit encore "mode roue".

La connaissance et la reconnaissance de ces deux modes propres sont importantes pour le contrôle d'un véhicule et la synthèse de la loi de commande des amortisseurs, dans la mesure où elles permettent l'identification de la fréquence d'excitation et, par voie de conséquence, la commande en temps réel de l'état des amortisseurs, quel qu'en soit le type, avec un temps de réponse très court.

En effet, si les amortisseurs remplissent spontanément, de façon satisfaisante, le rôle qui leur est assigné par construction et qui consiste à diminuer les oscillations du châssis en mode caisse et en mode roue, en revanche ils ont une nette tendance à augmenter ces oscillations en dehors de ces deux modes propres.

La voie suivie par l'invention consiste à utiliser, en combinaison, l'information détenue a priori sur le comportement du sous-système modélisé, et des mesures instantanées de paramètres physiques par lesquels s'exprime ce comportement, pour retrouver la fréquence de l'excitation qu'applique à ce sous-système le profil $Zs$ de la route, qui est un signal aléatoire, non mesurable, et non directement observable.

Cependant l'invention repose, de façon fondamentale, sur la découverte du fait que le déphasage entre deux fonctions de transfert représentant le comportement du sous-système modélisé, par exemple deux des fonctions de transfert précédemment explicitées, est une information beaucoup plus précieuse, pour l'identification de la fréquence du signal d'excitation, que celle que constitue la connaissance du gain de ces fonctions.

En effet, comme le montre au moins partiellement la figure 2, l'information concernant le déplacement des masses subit, en gain, un filtrage important dans la zone des hautes fréquences, la valeur du gain tendant rapidement vers zéro et se noyant dans les bruits de mesure au-delà de 75 Hz, et même à des fréquences beaucoup plus basses encore pour la masse suspendue.

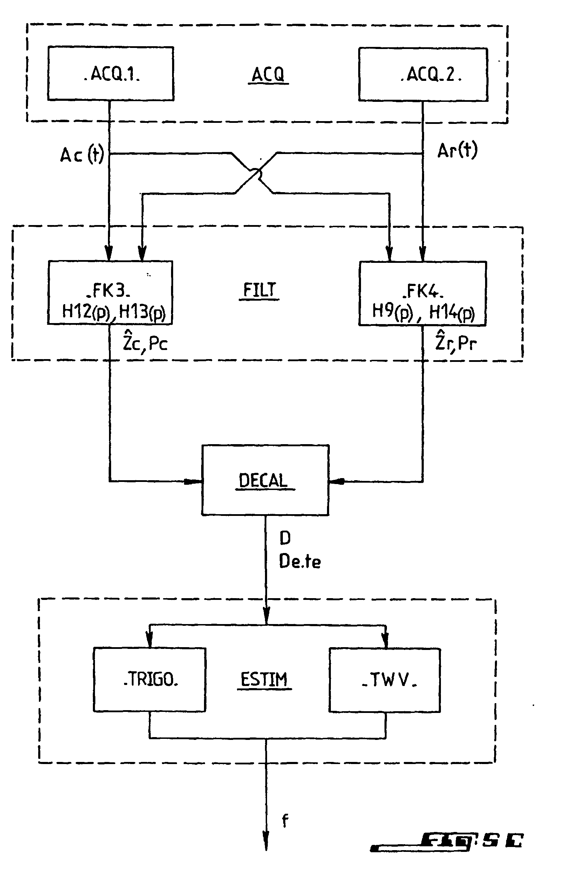

La voie suivie par l'invention, qui prend en compte les déphasages des signaux au lieu de leurs amplitudes, permet de contourner cette difficulté, comme l'illustre la figure 3 qui montre l'importance des déphasages relatifs que prennent les différentes fonctions de transfert $H_4(p)$, $H_1(p)$, et $H_2(p)$, en fonction de la fréquence de l'excitation que produisent les inégalités de la route, c'est-à-dire en fonction du facteur $\omega / 2.\pi$.

Pour sa mise en oeuvre, le procédé de l'invention doit d'abord comprendre une procédure d'acquisition, qui consiste au moins à élaborer une première séquence temporelle de mesure, constituée par des échantillons de mesure successifs représentant des valeurs successives prises par un premier paramètre observable lié à l'altitude instantanée du châssis et / ou de la roue.

Dans un exemple de réalisation possible, qui correspond au mode de réalisation préféré de l'invention et qui sera utilisé tout au long de la description pour exposer l'invention, cette procédure d'acquisition consiste à acquérir périodiquement, à une fréquence d'échantillonnage au moins double de la plus haute fréquence d'excitation attendue, et à stocker pour leur traitement, des signaux de mesure délivrés par un capteur de débattement installé entre le châssis et la roue, et représentatifs de la valeur instantanée du débattement du châssis par rapport à la roue, c'est-à-dire de la grandeur $Zrel$, égale à $Zr - Zc$.

Le procédé de l'invention comprend par ailleurs une procédure de filtrage qui permet, au moins à partir de la première séquence temporelle de mesure, en l'occurrence à partir des valeurs successives de $Zrel$, de produire au moins deux séquences, qui seront dites "première séquence temporelle dérivée", et "deuxième séquence temporelle dérivée".

Le mot "dérivée", tel qu'il est utilisé ici, ne doit pas du tout être interprété comme se référant à l'opération mathématique de dérivation temporelle, mais doit être compris comme indiquant que les "première séquence temporelle dérivée", et "deuxième séquence temporelle dérivée" ne sont pas des données brutes, mais des données issues d'un traitement.

La première séquence temporelle dérivée comprend au moins une première séquence temporelle principale dérivée, constituée par des estimations successives de l'altitude instantanée du châssis, c'est-à-dire par des échantillons successifs représentatifs de l'estimation $\hat{Zc}$ de la grandeur $Zc$.

De préférence, la première séquence temporelle dérivée comprend aussi une première séquence temporelle auxiliaire dérivée, constituée par des valeurs de variance successives respectivement associées aux estimations de la première séquence temporelle principale dérivée, c'est-à-dire par des échantillons successifs représentatifs de la variance Pc de la grandeur $Zc$.

De même, la deuxième séquence temporelle dérivée comprend au moins une deuxième séquence temporelle principale dérivée, constituée par des estimations successives de l'altitude instantanée de la roue, c'est-à-dire par des échantillons successifs représentatifs de l'estimation $\hat{Zr}$ de la grandeur $Zr$.

Cette deuxième séquence temporelle dérivée comprend avantageusement, elle aussi, une deuxième séquence temporelle auxiliaire dérivée, constituée par des valeurs de variance successives respectivement associées aux estimations de la deuxième séquence temporelle principale dérivée, c'est-à-dire par des échantillons successifs représentatifs de la variance Pr de la grandeur $Zr$.

La procédure de filtrage qui conduit à l'obtention des deux séquences temporelles dérivées est de préférence réalisée par application des techniques de traitement de signaux connues sous le nom de filtrage de Kalman, et qui seront rappelées ultérieurement.

Le procédé de l'invention comprend par ailleurs une procédure d'extraction de décalage temporel qui utilise les première et deuxième séquences dérivées pour produire une séquence de valeurs dite "séquence temporelle préparatoire".

Cette séquence temporelle préparatoire est constituée par des valeurs estimées successives d'un décalage temporel instantané mis en évidence entre l'altitude instantanée du châssis et l'altitude instantanée de la roue.

Chaque valeur estimée de ce décalage temporel est obtenue au moins par optimisation d'une fonction de corrélation des première et deuxième séquences temporelles dérivées, ces dernières incluant au moins les séquences temporelles principales dérivées et de préférence aussi les séquences temporelles auxiliaires dérivées.

Les techniques de construction et d'optimisation d'une fonction de corrélation seront elles aussi rappelées ultérieurement.

Le procédé de l'invention comprend enfin une procédure d'estimation de fréquence, qui utilise la séquence temporelle préparatoire pour produire une séquence temporelle finale constituée par des valeurs estimées successives de la fréquence instantanée de l'excitation mécanique qu'exercent, sur le sous-système modélisé, les inégalités de la voie sur laquelle circule le véhicule.

Chacune de ces valeurs de fréquence est obtenue par observation et traitement de la séquence temporelle préparatoire dans une fenêtre temporelle d'observation de durée égale ou au moins approximativement égale à la valeur estimée correspondante du décalage temporel instantané.

Et chaque valeur de fréquence est choisie comme étant celle de la fréquence qui a pour déphasage instantané le décalage temporel instantané obtenu à l'issue de la procédure d'extraction de décalage temporel.

La nature peu intuitive de cette dernière caractéristique justifie un rappel sur la relation qui lie les notions de déphasage et de temps de retard.

D'une façon générale, la fréquence instantanée $\nu_i(t)$ d'un signal $x(t)$ s'exprime par :

$$\nu_i(t) = \frac{1}{2\pi} \frac{d \ arg(Z)}{dt}(t)$$

avec $Z(t) = x(t) + j. \ H\{x(t)\}$, avec :

$Z(t)$ : signal analytique de $x(t)$

$H$ : Transformation de Hilbert

D'une façon duale, le retard de groupe $\tau$ qui caractérise l'instant d'apparition d'une fréquence $\nu$ s'exprime par :

$$\tau(\nu) = \frac{1}{2\pi} \frac{d \ arg(Z)}{d\nu}(\nu).$$

Soit le signal analytique $Z(t) = A(t). \ e^{j\Phi(t)}$, où $A(t)$ est l'amplitude instantanée, où $\Phi(t)$ est la phase instantanée, où $A(t) = |Z(t)|$, et où $\Phi(t) = arg \ (Z)$.

La fréquence instantanée s'écrit alors :

$$\nu_i(t) = \frac{1}{2\pi} \frac{d\Phi(t)}{dt}$$

et le temps de groupe, c'est-à-dire le temps de propagation du signal à travers les filtres du système, s'écrit :

$$\tau = -\frac{d\Phi}{d\omega}$$

Si, de surcroît, le modèle à l'origine de ce signal est connu, c'est-à-dire s'il existe une relation explicite du type $\Phi = f(\omega)$, alors le temps de groupe s'exprime par :

$$\tau = -\frac{d\Phi}{d\omega} = -f'(\omega)$$

Plus concrètement, soit le signal monochromatique $x(t) = a.\cos(\omega_i.t + \phi_o)$, d'amplitude a, de pulsation $\omega_i$, et de phase à l'origine, le signal analytique associé sachant que $\omega_i = 2\pi \ . \ \nu_i$, est donné par :

$$Z \ (t) = a \ . \ e^{j.\varphi_o} . e^{j.\omega_i.t},$$

où

|Z(t)| = a est l'enveloppe constante, où

$\Phi_i(t) = 2\pi\nu_i.t + \phi_o$ est la phase instantanée, où

$\nu_i(t) = \nu_i$ est la fréquence instantanée, et où

$\tau$ = -t est le temps de groupe.

Dans ce cas, le temps de déphasage, c'est-à-dire l'intervalle de temps $\Delta t$ entre deux instants $t_2$ et $t_1$, s'exprime par :

$$\Delta t = t_2 - t_1 = \frac{\varphi_i(t_2) - \varphi_i(t_1)}{\omega_i}.$$

Or, pour un système linéaire et invariant dans le temps, défini par une fonction de transfert H($\omega$), il est convenu d'appeler phase de la réponse de ce système la fonction $\varphi(\omega)$ telle que :

$$H(\omega) = |H(\omega)|e^{-j\varphi(\omega)},$$

cette convention permettant donc d'exprimer la relation entre la phase et le temps de propagation de groupe ou retard $\tau(\omega)$ par :

$$\tau(\omega) = -d\varphi/d\omega$$

Dans le cas le plus simple, la procédure d'estimation de fréquence élabore chaque valeur de la séquence temporelle finale en tant que solution, pour la valeur estimée correspondante du déphasage instantané, d'au moins une équation représentant le modèle physique associé au sous-système modélisé, c'est-à-dire au système constitué par la roue, les organes de suspension et la partie du châssis supportée par la roue.

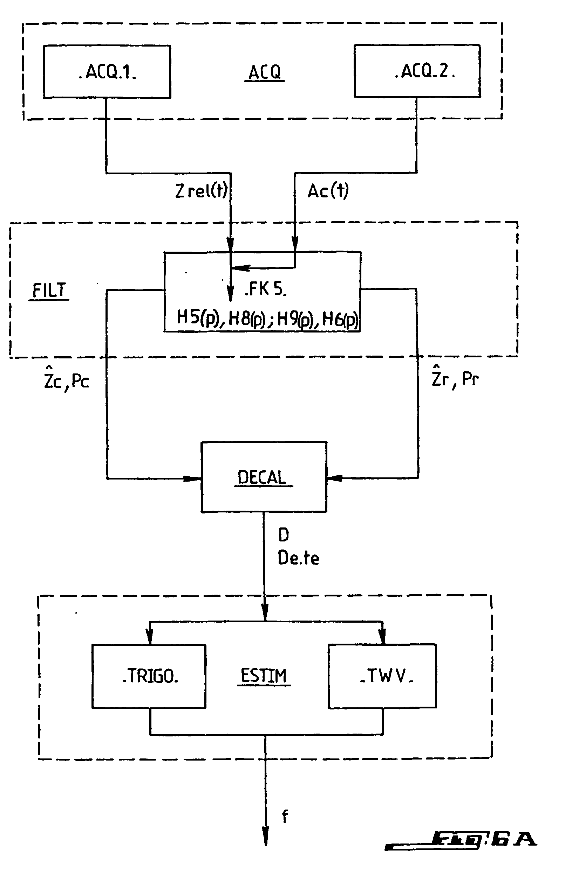

Un premier exemple de mise en oeuvre de l'invention telle que décrite jusqu'à présent est schématisé par la figure 4A.

Au cours de la procédure d'acquisition ACQ sont élaborés, au moyen d'un capteur de débattement connu en soi, des échantillons de mesure successifs *Zrel(t$_1$), Zrel(t$_2$), Zrel(t$_3$)*, etc. , représentant des valeurs successives prises par la grandeur *Zrel*, c'est-à-dire *Zr - Zc*, cette grandeur constituant donc un premier paramètre observable lié à l'altitude instantanée *Zc* du châssis et à l'altitude instantanée *Zr* de la roue.

La séquence temporelle de mesure *Zrel(t)* ainsi obtenue subit en parallèle, dans le cadre de la procédure de filtrage FILT, un filtrage dans un premier filtre de Kalman FK1, et un filtrage dans un second filtre de Kalman FK2.

Le premier filtre de Kalman FK1 est construit à partir de la fonction de transfert :

$$H_5(p) = \frac{Zc(p)}{Zrel(p)},$$

et le deuxième filtre de Kalman FK2 est construit à partir de la fonction de transfert :

$$H_8(p) = \frac{Zr(p)}{Zrel(p)}.$$

Il convient de rappeler ici que le filtrage de Kalman est un algorithme de calcul numérique récursif qui permet de déterminer la meilleure estimation possible de l'état d'un système dynamique quelconque à partir de signaux de mesure, obtenus par observation de ce système, et entachés d'erreurs dues à des perturbations en général aléatoires.

L'état du système étudié est donc supposé pouvoir être décrit, à chaque instant k, au moyen d'un vecteur de variables d'état Xe, prenant la valeur Xe(k) à l'instant k, ce vecteur étant un vecteur colonne de dimension n donnée.

La capacité intrinsèque de ce système à induire une évolution de son état de la valeur Xe(k) à l'instant k à la valeur Xe(k+1) à l'instant k+1 est définie par une matrice dite "de transition", notée A(k+1/k), et de dimension *n* x *n*.

Par ailleurs, ce système est soumis à l'influence d'un signal d'entrée, encore dit "commande", représenté par un vecteur colonne de dimension *j* donnée (le symbole *j* représentant ici un nombre entier qui ne doit pas être confondu avec le nombre imaginaire de même symbole) et prenant la valeur notée U(k) à l'instant k.

L'influence de la commande U(k) sur la capacité du système à atteindre l'état Xe(k+1) à l'instant k+1 est définie par une matrice dite "de commande", notée B(k) à l'instant k, et de dimension $n$ x $j$.

Ce système est encore, dans le cas général, soumis à l'influence de bruits d'état représentés par un vecteur colonne de dimension n et prenant la valeur notée W(k) à l'instant k, l'influence de ces bruits W(k) sur la capacité du système à atteindre l'état Xe(k+1) à l'instant k+1 étant définie par une matrice dite "de bruit", notée G(k) à l'instant k, et de dimension n x n.

Globalement, l'évolution de l'état du système entre les instants k et k+1 est ainsi représentée par l'équation, dite "équation d'état", de la forme :

$$Xe(k + 1) = A(k + 1/k)Xe(k) + B(k)U(k) + G(k)W(k).$$

La manifestation du comportement qu'adopte le système en fonction de l'évolution de son état prend la forme d'un signal de sortie, encore dit "observation", représenté par un vecteur colonne de dimension $m$ donnée et prenant la valeur notée Ye(k) à l'instant k.

L'observation Ye(k) est liée d'une part à l'état Xe(k) du système à l'instant k par une matrice dite "d'observation", notée C(k) à l'instant k, et de dimension $m$ x $n$, est liée d'autre part au signal d'entrée U(k) par une matrice dite "de commande", notée D(k) à l'instant k, et de dimension $m$ x $j$, et inclut enfin un bruit dit "d'observation", représenté par un vecteur colonne de dimension $m$ noté V(k) à l'instant k.

Dans ces conditions, l'observation Ye(k) est donnée par l'équation, dite "équation d'observation", de la forme :

$$Ye(k) = C(k)Xe(k)+D(k).U(k) + V(k).$$

Les matrices A(k+1/k), B(k), C(k), D(k) et G(k) peuvent être obtenues, de façon connue en soi, à partir de la fonction de transfert sur la base de laquelle est construit le filtre de Kalman considéré.

Par ailleurs, dans le cas du premier filtre de Kalman FK1, qui est construit sur la base de la fonction de transfert $H_5(p)$ prenant $Zrel$ comme signal d'entrée et $Zc$ comme signal de sortie, la commande U(k) est constituée par les valeurs successives $Zrel(t)$, et l'observation Ye(k) par les valeurs successives $Zc(t)$, le vecteur U(k) étant donc lui aussi connu.

De même, dans le cas du second filtre de Kalman FK2, qui est construit sur la base de la fonction de transfert $H_8(p)$ prenant $Zrel$ comme signal d'entrée et $Zr$ comme signal de sortie, la commande U(k) est constituée par les valeurs successives $Zrel(t)$, et l'observation Ye(k) par les valeurs successives $Zr(t)$, le vecteur U(k) étant donc lui aussi connu.

La procédure de filtrage FILT suppose ainsi la mise en oeuvre d'une procédure préalable de modélisation, MOD, qui comprend, pour le modèle physique associé au système constitué par la roue, les organes de suspension et le châssis associé, l'élaboration de la fonction de transfert $H_5(p)$ pour la réalisation du filtre FK1, et l'élaboration de la fonction de transfert $H_8(p)$ pour la réalisation du filtre FK2.

Dans la mesure où, à la différence de la procédure de filtrage FILT qui est mise en oeuvre de façon itérative, la procédure préalable de modélisation MOD n'est mise en oeuvre qu'une fois pour toutes, cette dernière procédure n'a pas, par souci de cohérence, été représentée sur la figure 4A.

Par convention, la fonction de transfert $H_5(p)$, qui prend le premier paramètre observable $Zrel$ comme signal d'entrée et l'altitude instantanée du châssis $Zc$ pour signal de sortie, reçoit l'appellation de "première fonction de transfert inverse", le terme "inverse" étant justifié par le fait que, d'un point de vue strictement physique au moins, l'altitude instantanée du châssis $Zc$ intervient en tant que cause co-agissante, et non en tant qu'effet, dans la détermination du débattement $Zrel$.

De façon analogue, la fonction de transfert $H_8(p)$, dans la mesure où elle prend le premier paramètre observable $Zrel$ comme signal d'entrée et l'altitude instantanée de la roue $Zr$ pour signal de sortie, peut recevoir l'appellation de "deuxième fonction de transfert inverse".

Dans les équations d'état et d'observation précédemment explicitées, les bruits d'état W(k) et d'estimation V(k) sont des bruits blancs, décorrélés, de moyenne nulle et de covariance connue.

L'état initial $Xe(0)$ est aléatoire, de moyenne $\bar{X}e(0)$ et de covariance $P(0)$ connues. Il est de plus indépendant des bruits d'état et d'observation.

A partir de l'ensemble de ces éléments connus, le filtrage de Kalman consiste de façon connue à trouver, étant données les observations Ye(k+1) correspondant aux états Xe(k+1) définis sur la base des états antérieurs Xe(k), l'estimation Xe(k+1)qui minimise l'erreur (Xe(k+1)-Xe(k+1)).

Ainsi, ce filtrage fournit non seulement l'estimation Ye(k+1) de Ye(k+1), mais également la variance correspondante P(k+1) pour chaque valeur de k.

Dans ces conditions, le premier filtre de Kalman FK1 produit donc une première séquence temporelle "dérivée", c'est-à-dire résultant d'un traitement, incluant une première séquence temporelle principale dérivée constituée par des estimations successives de l'altitude instantanée du châssis, c'est-à-dire par des échantillons successifs représentatifs de l'estimation $\hat{Zc}$ de la grandeur $Zc$, et une première séquence temporelle auxiliaire dérivée constituée par des valeurs de variance successives respectivement associées aux estimations de la première séquence temporelle principale dérivée, c'est-à-dire par des échantillons successifs représentatifs de la variance Pc de la grandeur $\hat{Zc}$.

De la même manière, le second filtre de Kalman FK2 fournit une deuxième séquence temporelle "dérivée" incluant une deuxième séquence temporelle principale dérivée constituée par des estimations successives de l'altitude instantanée de la roue, c'est-à-dire par des échantillons successifs représentatifs de l'estimation $\hat{Zr}$ de la grandeur $Zr$, et une deuxième séquence temporelle auxiliaire dérivée constituée par des valeurs de variance successives respectivement associées aux estimations de la deuxième séquence temporelle principale dérivée, c'est-à-dire par des échantillons successifs représentatifs de la variance Pr de la grandeur $\hat{Zr}$.

Les deux séquences dérivées ainsi obtenues, c'est-à-dire $\hat{Zc}$, Pc d'une part et $\hat{Zr}$, Pr d'autre part, sont ensuite traitées par la procédure d'extraction de décalage temporel DECAL, qui fournit en sortie une séquence de valeurs dite "séquence temporelle préparatoire", constituée par des valeurs estimées successives d'un décalage temporel instantané D mis en évidence entre l'altitude instantanée du châssis et l'altitude instantanée de la roue.

L'homme de l'art comprendra que ce décalage temporel, bien que noté "D", ne doit pas du tout être confondu avec la matrice de commande D(k) évoquée plus haut.

Le principe d'extraction de ce décalage se ramène au modèle basique rappelé ci-après.

Soit deux signaux x(t) et y(t), non stationnaires et aléatoires, issus de l'observation d'un système dynamique.

Ces signaux x(t) et y(t) sont par ailleurs supposés contenir un même signal utile s(t), considéré comme stationnaire dans une fenêtre d'observation donnée.

Les signaux x(t) et y(t) répondent alors aux relations suivantes :

$$x(t) = s(t) + w_x(t),$$

et

$$y(t) = A.s(t-D) + w_y(t),$$

où D représente le retard, à estimer, que présente le signal y(t) par rapport au signal x(t), où $w_x(t)$ et $w_y(t)$ sont des bruits gaussiens de valeur moyenne nulle, et où A, à ne pas confondre avec la matrice de transition A(k+1/k) évoquée plus haut, représente l'amplitude relative du signal y(t) par rapport au signal x(t).

Le principe de l'extraction du décalage temporel D consiste à corréler les signaux x(t) et y(t), c'est-à-dire à appliquer au signal y(t) des décalages temporels successifs $\tau$, à comparer au signal x(t) le signal y(t) ainsi obtenu, et à identifier au retard D le décalage $\tau$ qui conduit à la plus grande ressemblance entre le signal y(t) ainsi obtenu et le signal x(t).

Concrètement, cette corrélation peut être mise en oeuvre suivant plusieurs techniques formelles.

Une première technique consiste à calculer, pour chaque valeur du décalage $\tau$, la fonction d'inter-corrélation des signaux x(t) et y(t).

Pour les signaux x(t) et y(t) répondant aux relations :

$$x(t) = s(t) + w_x(t),$$

et

$$y(t) = A.s(t-D) + w_y(t),$$

la fonction d'inter-corrélation $R_{xy}(\tau)$ de ces signaux x(t) et y(t) prend la forme :

$$R_{xy}(\tau) = A.R_{ss}(\tau-D) + R_{wx, wy}(\tau),$$

où $R_{ss}(\tau)$ est la fonction d'auto-corrélation du signal s(t), et où $R_{wx, wy}(\tau)$ est la fonction d'inter-corrélation entre les bruits $w_x(t)$ et $w_y(t)$, les termes croisés faisant intervenir le signal utile s(t) et les bruits $w_x(t)$ et $w_y(t)$ s'annulant compte tenu de ce que les bruits sont gaussiens alors que le signal utile s(t) est supposé stationnaire dans la fenêtre d'observation.

Pour autant que les bruits $w_x(t)$ et $w_y(t)$ ne soient pas corrélés, la fonction d'inter-corrélation $R_{xy}(\tau)$ doit présenter un maximum pour une valeur de $\tau$ qui représente alors le retard D à estimer.

Dans son application à l'invention, cette technique est mise en oeuvre pour estimer, à titre principal, le décalage temporel entre les échantillons successifs représentatifs de l'estimation *Zc* de la grandeur *Zc,* et les échantillons successifs représentatifs de l'estimation *Zr* de la grandeur *Zr,* qui jouent ainsi le rôle des signaux x(t) et y(t).

Mais dans la mesure où les variances Pc et Pr de ces échantillons sont également disponibles, il est également possible de calculer la fonction d'inter-corrélation sur des échantillons recalculés qui se situent, par rapport aux échantillons originaux des séquences temporelles principales dérivées *Zc* et *Zr*, dans des plages de tolérance respectives compatibles avec les variances Pc et Pr.

En pratique, la technique d'extraction de décalage temporel par calcul de la fonction d'inter-corrélation n'est cependant utilisable que dans des conditions relativement favorables.

En effet, la dimension finie de la fenêtre d'observation peut dégrader la validité des hypothèses faites sur la nature des bruits, la fonction d'inter-corrélation $R_{xy}(\tau)$ risquant alors de présenter un maximum relativement étalé, de ne présenter aucun pic observable, ou d'en présenter plusieurs de même amplitude.

Pour extraire néanmoins le décalage temporel D recherché, il convient alors de recourir à une technique de corrélation moins sensible aux bruits, qui peut être constituée par le procédé dit des cumulants d'ordre 3 rappelé ci-après.

Les signaux x(t) et y(t) précédemment évoqués étant supposés être échantillonnés avec une période d'échantillonnage "$t_e$", et l'instant "t" étant supposé correspondre à un nombre "n" de périodes "$t_e$", ces signaux peuvent être symboliquement ré-écrits sous la forme suivante :

$$x(n) = s(n) + w_x(n),$$

et

$$y(n) = A.s(n-D_e) + w_y(n),$$

où $D_e$ est un nombre entier, qu'il convient d'estimer, égal à Ent (D / $t_e$), le symbolisme Ent représentant lui-même la fonction "partie entière".

Soit P la valeur maximum attendue du retard $D_e$, cette valeur P ne devant évidemment pas être confondue avec l'opérateur de dérivation "p" de la transformée de Laplace.

En utilisant l'écriture adoptée par un modèle connu de l'homme de l'art sous l'acronyme "ARMA" (de l'anglais "Auto-Regressive Moving-Average"), le signal y(n) peut être ré-écrit sous la forme :

$$y(n) = \sum_{i=-P}^{P} a(i)x(n-i) + w(n)$$

où a(n) est une amplitude relative de valeur nulle pour toute valeur de "n" différente de $D_e$ et égale à A pour n = $D_e$, et où "i" est un indice compteur représentant un nombre entier.

Dans ces conditions, les cumulants d'ordre 3 s'expriment à partir des espérances mathématiques E, des conjugués complexes x*(n) et y*(n) de x(n) et y(n), et de deux variables temporelles $\tau$ et $\rho$ représentant des nombres entiers de périodes d'échantillonnage $t_e$, par les relations :

$$C_{yxx}(\tau,\rho) := E\{y^*(n)x(n+\tau)x(n+\rho)\}$$

$$C_{xxx}(\tau,\rho) := E\{x^*(n)x(n+\tau)x(n+\rho)\}$$

En utilisant les travaux de Nikias et Pan (Nikias, C.L. and R. Pan, "Time delay estimation in unknown Gaussian spatially correlated noise", IEEE Trans. ASSP, Vol. 36, pp. 1706-14, Nov. 1988), il est possible d'identifier, entre ces cumulants, une relation qui prend la forme récursive suivante:

$$C_{yxx}(\tau, \rho) = \sum_{i=-P}^{P} a(i) C_{xxx}(\tau + i, \rho + i)$$

Cette relation, écrite pour différentes valeurs des deux variables temporelles $\tau$ et $\rho$ forme un système d'équations linéaires en a(i) de la forme :

$$C_{xxx} a = C_{yxx}.$$

La résolution de ce système d'équations permet, par la recherche du maximum de la grandeur |a(i)|, d'identifier la valeur "j" de l'indice "i" pour laquelle ce maximum est atteint, et à laquelle est assimilé le retard $D_e$ à estimer.

La valeur maximum attendue P du retard $D_e$ est choisie selon le degré de connaissance du système modélisé, cette valeur pouvant prendre initialement une valeur relativement élevée et être ajustée en temps réel à la valeur trouvée pour le retard $D_e$ à mesure que s'affine la connaissance du processus observé, la valeur P représentant alors la fenêtre d'observation du signal.

Dans la mesure où elle élimine le bruit gaussien, la technique qui repose sur l'utilisation des cumulants d'ordre 3 est particulièrement puissante.

Comme dans le cas de la technique utilisant une fonction d'inter-corrélation, la technique utilisant les cumulants d'ordre 3 est concrètement mise en oeuvre en attribuant le rôle des signaux x(n) et y(n) aux échantillons successifs représentatifs de l'estimation *Zc*, et aux échantillons successifs représentatifs de l'estimation *Zr*, et / ou à des échantillons recalculés en tenant compte des variances Pc et Pr.

La séquence temporelle préparatoire que représentent les valeurs successives du retard D, éventuellement exprimé sous la forme $D_e \cdot t_e$, est ensuite traitée par la procédure d'estimation de fréquence ESTIM, qui produit en sortie une séquence temporelle finale constituée par des valeurs estimées successives de la fréquence instantanée "f" de l'excitation mécanique qu'exercent, sur le sous-système modélisé, les inégalités de la voie sur laquelle circule le véhicule.

Chacune des valeurs instantanées attribuées par la procédure d'estimation de fréquence ESTIM à la fréquence recherchée f est obtenue par observation et traitement de la séquence temporelle préparatoire dans une fenêtre temporelle d'observation de durée égale ou au moins approximativement égale à la valeur estimée correspondante du décalage temporel instantané $D_e$.

L'exposé du principe de cette estimation justifie le rappel de fonctions de transfert déjà présentées plus haut, à savoir :

$$H_1(p) = \frac{Zr(p)}{Zs(p)}, \ H_2(p) = \frac{Zc(p)}{Zs(p)}, \ \text{et} \ H_4(p) = \frac{Zc(p)}{Zr(p)}.$$

Si : $\varphi_c$ (p) désigne le déphasage entre les signaux Zc(p) et Zs(p), et
$\varphi_r$ (p) le déphasage entre les signaux Zc(p) et Zs(p),
Alors :

$$\varphi_c(p) = \arg\left(\frac{Zc(p)}{Zs(p)}\right),$$

où "arg" désigne la fonction "argument",

$$\varphi_r(p) = \arg\left(\frac{Zr(p)}{Zs(p)}\right),$$

et

$$\varphi_c(p) - \varphi_r(p) = arg\left(\frac{Zc(p)}{Zr(p)}\right) = arg(H_4(p)).$$

Or, dans le cas où le comportement du système observé ne conduit pas à remettre en cause la validité du modèle physique qui y est associé, la fonction $H_4(p)$ est connue et égale à :

$$H_4(p) = \frac{Zc(p)}{Zr(p)} = \frac{(Kc + Rp)}{Mcp^2 + Rp + Kc},$$

de sorte que la fréquence "f" recherchée, reliée à la pulsation $\omega$ par la relation f = $\omega$ / 2.$\pi$, peut être calculée sur la base de la relation :

$$\varphi_c - \varphi_r = arg(H_4(j\omega)) = arctg\left(\frac{R\omega}{K_c}\right) - arctg\left(\frac{R\omega}{K_c - M_c\,\omega^2}\right).$$

Cette technique, repérée par la référence TRIGO sur la figure 4A, présente l'avantage d'une mise en oeuvre relativement aisée.

Il peut arriver néanmoins que le comportement du système observé conduise à remettre temporairement en cause la validité du modèle physique qui y est associé.

C'est par exemple le cas si les estimations de Zc(p) et de Zr(p) montrent que la roue du sous-système observé a quitté le sol.

Dans ce cas, il peut être opportun de recourir à des techniques de traitement temps-fréquence plus sophistiquées, dont le domaine de validité ne soit pas restreint à celui du modèle du sous-système observé.

Plusieurs techniques connues de l'homme de l'art peuvent être utilisées à cette fin, et notamment les techniques connues sous les noms de "transformée en ondelettes", et de "transformée Wigner-Ville".

L'idée de base de la technique de transformée en ondelettes consiste à décomposer un signal sur une famille de signaux élémentaires dont il est supposé être une superposition linéaire.

Pour obtenir une information à la fois temporelle et fréquentielle sur un signal $x(t)$, il faut décomposer ce dernier sur des fonctions concentrées à la fois en temps et en fréquence.

Ces fonctions sont définies en partant d'une fonction $\psi(t)$, appelée ondelette mère si elle est bien localisée et si elle est oscillante, cette appellation rappelant que cette fonction ressemble à une onde, mais de faible amplitude dans la mesure où elle est localisée.

Deux conditions sont alors nécessaires pour définir ces fonctions : l'une concerne leur localisation avec une décroissance rapide quant $t$ augmente indéfiniment, et l'autre impose que $\psi(t)$ vibre comme une onde.

La mère des ondelettes engendre les autres ondelettes de la famille $\psi_{a,b}(t)$, par une dilatation définie par un paramètre $a$, et par une translation dans le temps définie par un paramètre $b$.

$$\psi_{a,b}(t) = \frac{1}{\sqrt{a}}\,\psi\left(\frac{t-b}{a}\right)\quad \text{avec}\quad a>0\text{ et }b\text{ réel}$$

Tout signal d'énergie finie peut alors s'écrire comme une combinaison linéaire d'ondelettes $\psi_{a,b}(t)$ et les coefficients de cette combinaison sont les produits scalaires:

$$C(a,b) = \frac{1}{\sqrt{a}} \int_{-\infty}^{+\infty} x(t)\psi\left(\frac{t-b}{a}\right)dt$$

Ces coefficients mesurent, en un certain sens, les fluctuations du signal $x(t)$ autour du point $b$ à l'échelle fournie par $a$, cette opération étant dénommée "transformée en ondelettes continue".

Par construction, une telle transformée est davantage une représentation temps-échelle qu'une représentation temps-fréquence mais peut fournir, pour des ondelettes bien localisées en fréquence autour d'une valeur $f_0$, une interprétation temps-fréquence moyennant l'identification formelle

$$f = \frac{f_0}{a} \ .$$

La technique de transformée Wigner-Ville, qui sera désignée sous l'acronyme TWV utilisé sur la figure 4A, impose, pour le traitement de signaux réels, le recours aux signaux analytiques qui sont associés à ces signaux réels.

Si $x(t)$ désigne un signal réel, le signal analytique $z(t)$ associé est défini par :

$$z(t) = x(t) + iHx(t),$$

où $H$ désigne ici la transformée de Hilbert, à ne pas confondre avec les fonctions de transfert évoquées plus haut, et où "i" désigne la base des nombres imaginaires.

Si $z(f)$ et $x(f)$ représentent les transformées de Fourier respectives, la propriété suivante est équivalente à la définition que donne l'équation ci-dessus :

$$z(f) = \begin{cases} 2x(f) & \text{si } f > 0 \\ x(f) & \text{si } f = 0 \\ 0 & \text{si } f < 0 \end{cases}$$

Toute l'information contenue dans le signal réel initial se retrouve, sous une forme différente, dans le signal analytique correspondant.

Les principales raisons de l'utilisation du signal analytique dans la TWV sont liées au problème d'interférence qui résulte de la référence formelle à des fréquences négatives, et à la nécessité de sur-échantillonner le signal temporel réel.

Par définition, la transformée de Wigner-Ville associée à un signal analytique $Z$ est constituée par la fonction $W_z$ de deux variables temps et fréquence qui satisfait à la relation :

$$W_z(t,f) = \int_{-\infty}^{+\infty} Z\left(t + \frac{\tau}{2}\right) Z^*\left(t - \frac{\tau}{2}\right) e^{-2i\pi ft} d\tau \ .$$

La puissance de la technique de la TWV réside dans le fait que les moments normalisés d'ordre 0 et d'ordre 1 fournissent directement la fréquence instantanée $f_x(t)$ et le retard du groupe du signal réel grâce à la relation :

$$f_x(t) = \frac{\int\limits_{-\infty}^{+\infty} f.W_z(t,f)\,df}{\int\limits_{-\infty}^{+\infty} W_z(t,f)\,df}\ .$$

Une difficulté peut survenir dans la mise en oeuvre de la TWV, liée au fait que le calcul de cette transformée prend en compte la totalité du signal et n'est a priori possible que pour des signaux de durée finie, alors qu'en pratique la durée d'observation est souvent plus courte que celle du signal total.

Ce problème peut néanmoins être résolu par la mise en oeuvre d'une version évoluée de la TWV, appelée transformation de pseudo-Wigner-Ville, qui permet d'appliquer la TWV sur une tranche du signal découpée par une fenêtre d'observation.

Le procédé décrit jusqu'à présent peut faire l'objet d'autres variantes qu'illustrent les figures 4B et 4C.

Une variante (Figure 4B) consiste à utiliser, en tant que premier paramètre observable, l'accélération instantanée Ac du châssis, à construire le premier filtre de Kalman FK1 à partir de la fonction de transfert :

$$H_{12}(p) = \frac{Zc(p)}{Ac(p)} = H_5(p).H_6(p) = \frac{1}{p^2}$$

et à construire le deuxième filtre de Kalman FK2 à partir de la fonction de transfert :

$$H_9(p) = \frac{Zr(p)}{Ac(p)}.$$

Une autre variante (figure 4C) consiste à utiliser, en tant que premier paramètre observable, l'accélération instantanée Ar de la roue, à construire le premier filtre FK1 à partir de la fonction de transfert

$$H_{13}(p) = \frac{Zc}{Ar} = H_5(p).H_{11}(p),$$

et à construire le deuxième filtre de Kalman FK2 à partir de la fonction de transfert :

$$H_{14}(p) = \frac{Zr}{Ar} = H_8(p).H_{11}(p).$$

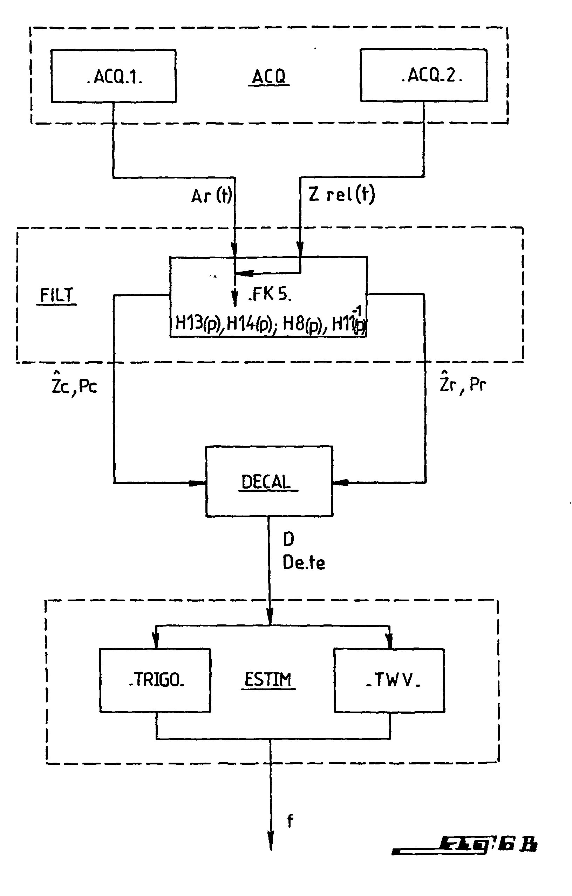

La figure 5A illustre une première variante d'un autre mode de réalisation de l'invention, impliquant l'utilisation de deux paramètres observables liés à l'altitude instantanée du châssis et / ou de la roue, en l'occurrence le débattement relatif $Zrel$ de la roue par rapport au châssis ($Zrel = Zr - Zc$), et l'accélération verticale du châssis $Ac$.

Dans ce cas, la procédure d'acquisition ACQ comprend deux sous-procédures d'acquisition ACQ_1 et ACQ_2 élaborant respectivement les première et deuxième séquences temporelles de mesure $Zrel$ et $Ac$.

La procédure préalable de modélisation MOD comprend alors, pour le modèle physique associé au système constitué par la roue, les organes de suspension et le châssis, non seulement l'élaboration de la fonction de transfert $H_5(p)$, qui prend $Zrel$ comme signal d'entrée et Zc comme signal de sortie, et de la fonction de transfert $H_8(p)$, qui prend $Zrel$ comme signal d'entrée et $Zr$ comme signal de sortie, mais également l'élaboration de la fonction de transfert $H_{12}(p)$, qui prend $Ac$ comme signal d'entrée et $Zc$ comme signal de sortie, et de la fonction de transfert $H_9(p)$, qui prend $Ac$ comme signal d'entrée et $Zr$ comme signal de sortie.

La procédure de filtrage FILT utilise alors deux filtres de Kalman FK3 et FK4 fournissant respectivement les première et deuxième séquences temporelles dérivées, c'est-à-dire $Zc$, Pc d'une part et $Zr$, Pr d'autre part, le filtre FK3 étant par exemple construit à partir des fonctions de transfert $H_5(p)$ et $H_{12}(p)$, et le filtre FK4 à partir des fonctions de transfert $H_8(p)$ et $H_9(p)$.

A partir de la production des séquences temporelles dérivées, le traitement peut être poursuivi comme dans le mode de réalisation décrit en référence aux figures 4A à 4C.

La figure 5B illustre une autre variante du mode de réalisation de l'invention impliquant l'utilisation de deux paramètres observables liés à l'altitude instantanée du châssis et / ou de la roue, cette variante utilisant en l'occurrence le débattement relatif *Zrel* de la roue par rapport au châssis (*Zrel = Zr - Zc*), et l'accélération verticale de la roue Ar.

Dans ce cas, la procédure d'acquisition ACQ comprend deux sous-procédures d'acquisition ACQ_1 et ACQ_2 élaborant respectivement les première et deuxième séquences temporelles de mesure *Zrel* et *Ar.*

La procédure préalable de modélisation MOD comprend alors, pour le modèle physique associé au système constitué par la roue, les organes de suspension et le châssis, non seulement l'élaboration de la fonction de transfert $H_5(p)$, qui prend *Zrel* comme signal d'entrée et *Zc* comme signal de sortie, et de la fonction de transfert $H_8(p)$, qui prend *Zrel* comme signal d'entrée et *Zr* comme signal de sortie, mais également l'élaboration de la fonction de transfert $H_{13}(p)$, qui prend *Ar* comme signal d'entrée et *Zc* comme signal de sortie, et de la fonction de transfert $H_{14}(p)$, qui prend *Ar* comme signal d'entrée et *Zr* comme signal de sortie.

La procédure de filtrage FILT utilise alors deux filtres de Kalman FK3 et FK4 fournissant respectivement les première et deuxième séquences temporelles dérivées, c'est-à-dire *Zc*, Pc d'une part et *Zr*, Pr d'autre part, le filtre FK3 étant par exemple construit à partir des fonctions de transfert $H_5(p)$ et $H_{13}(p)$, et le filtre FK4 à partir des fonctions de transfert $H_8(p)$ et $H_{14}(p)$.

A partir de la production des séquences temporelles dérivées, le traitement peut être poursuivi comme dans le mode de réalisation décrit en référence aux figures 4A à 4C.

La figure 5C illustre encore une variante du mode de réalisation impliquant l'utilisation de deux paramètres observables liés à l'altitude instantanée du châssis et / ou de la roue, cette variante utilisant en l'occurrence l'accélération verticale du châssis *Ac* et l'accélération verticale de la roue *Ar*.

Dans ce cas, la procédure d'acquisition ACQ comprend deux sous-procédures d'acquisition ACQ_1 et ACQ_2 élaborant respectivement les première et deuxième séquences temporelles de mesure *Ac* et *Ar*.

La procédure préalable de modélisation MOD comprend alors, pour le modèle physique associé au système constitué par la roue, les organes de suspension et le châssis, non seulement l'élaboration de la fonction de transfert $H_{12}(p)$, qui prend *Ac* comme signal d'entrée et *Zc* comme signal de sortie, et de la fonction de transfert $H_9(p)$, qui prend *Ac* comme signal d'entrée et *Zr* comme signal de sortie, mais également l'élaboration de la fonction de transfert $H_{13}(p)$, qui prend *Ar* comme signal d'entrée et *Zc* comme signal de sortie, et de la fonction de transfert $H_{14}(p)$, qui prend *Ar* comme signal d'entrée et *Zr* comme signal de sortie.

La procédure de filtrage FILT utilise alors deux filtres de Kalman FK3 et FK4 fournissant respectivement les première et deuxième séquences temporelles dérivées, c'est-à-dire *Zc*, Pc d'une part et *Zr*, Pr d'autre part, le filtre FK3 étant par exemple construit à partir des fonctions de transfert $H_{12}(p)$ et $H_{13}(p)$, et le filtre FK4 à partir des fonctions de transfert $H_9(p)$ et $H_{14}(p)$.

A partir de la production des séquences temporelles dérivées, le traitement peut être poursuivi comme dans le mode de réalisation décrit en référence aux figures 4A à 4C.

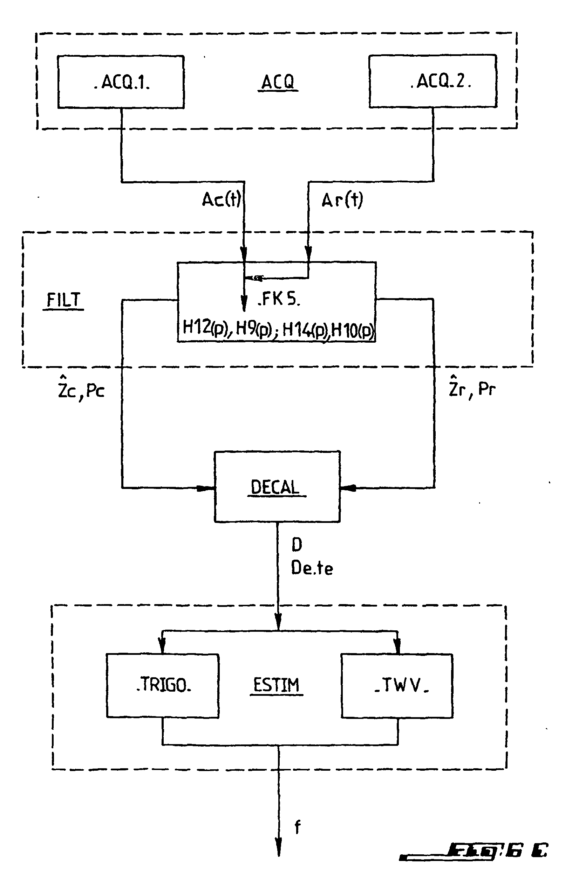

La figure 6A illustre une première variante d'un troisième mode de réalisation de l'invention, impliquant lui aussi l'utilisation des deux paramètres observables *Zrel* et *Ac,* la procédure d'acquisition ACQ comprenant donc cette fois encore deux sous-procédures d'acquisition ACQ_1 et ACQ_2 élaborant respectivement les première et deuxième séquences temporelles de mesure *Zrel* et *Ac.*

Dans ce cas, en plus de l'élaboration des fonctions de transfert $H_5(p)$ et $H_8(p)$, la procédure préalable de modélisation MOD comprend par exemple l'élaboration de la fonction de transfert $H_9(p)$, qui prend *Ac* comme signal d'entrée et *Zr* comme signal de sortie, et de la fonction de transfert $H_6(p)$, qui prend *Ac* comme signal d'entrée et *Zrel* comme signal de sortie.

La procédure de filtrage FILT n'utilise alors qu'un seul filtre de Kalman FK5, construit à partir de l'ensemble de ces fonctions de transfert, et fournissant les deux séquences temporelles dérivées, c'est-à-dire *Zc*, Pc d'une part et *Zr*, Pr d'autre part.

Le traitement ultérieur peut être réalisé, à partir de la production des séquences temporelles dérivées, comme dans le mode de réalisation décrit en référence aux figures 4A à 4C.

La figure 6B illustre une deuxième variante du troisième mode de réalisation de l'invention, impliquant en l'occurrence l'utilisation des deux paramètres observables *Ar* et *Zrel*, la procédure d'acquisition ACQ comprenant donc cette fois encore deux sous-procédures d'acquisition ACQ_1 et ACQ_2 élaborant respectivement les première et deuxième séquences temporelles de mesure Ar et *Zrel*.

Dans ce cas, en plus de l'élaboration des fonctions de transfert $H_{13}(p)$ et $H_{14}(p)$, la procédure préalable de modélisation MOD comprend par exemple l'élaboration de la fonction de transfert $H_8(p)$, qui prend *Zrel* comme signal d'entrée et *Zr* comme signal de sortie, et de la fonction de transfert $H_{11}^{-1}(p)$, qui prend *Zrel* comme signal d'entrée et *Ar* comme signal de sortie.

La procédure de filtrage FILT n'utilise alors qu'un seul filtre de Kalman FK5, construit à partir de l'ensemble de ces fonctions de transfert, et fournissant les deux séquences temporelles dérivées, c'est-à-dire *Zc*, Pc d'une part et *Zr*, Pr d'autre part.

Le traitement ultérieur peut être réalisé, à partir de la production des séquences temporelles dérivées, comme dans le mode de réalisation décrit en référence aux figures 4A à 4C.

La figure 6C illustre une troisième variante du troisième mode de réalisation de l'invention, impliquant en l'occurrence l'utilisation des deux paramètres observables *Ac* et *Ar*, la procédure d'acquisition ACQ comprenant donc cette fois encore deux sous-procédures d'acquisition ACQ_1 et ACQ_2 élaborant respectivement les première et deuxième séquences temporelles de mesure *Ac* et *Ar*.

Dans ce cas, en plus de l'élaboration des fonctions de transfert $H_{12}(p)$ et $H_9(p)$, la procédure préalable de modélisation MOD comprend par exemple l'élaboration de la fonction de transfert $H_{14}(p)$, qui prend *Ar* comme signal d'entrée et *Zr* comme signal de sortie, et de la fonction de transfert $H_4(p)$, qui prend *Ar* comme signal d'entrée et *Ac* comme signal de sortie.

La procédure de filtrage FILT n'utilise alors qu'un seul filtre de Kalman FK5, construit à partir de l'ensemble de ces fonctions de transfert, et fournissant les deux séquences temporelles dérivées, c'est-à-dire *Zc*, Pc d'une part et *Zr*, Pr d'autre part.

Le traitement ultérieur peut être réalisé, à partir de la production des séquences temporelles dérivées, comme dans le mode de réalisation décrit en référence aux figures 4A à 4C.

Le troisième mode de réalisation illustré par les figures 6A à 6C exploite un capteur maître pour estimer les grandeurs *Zc* et *Zr*, et un second capteur pour confirmer.

Dans les variantes correspondant aux figures 6A à 6C, le couple (maître, esclave) est successivement :

$\{Zrel, A_c\}$
$\{A_r, Zrel\}$ et
$\{A_c, A_r\}$.

Cependant, comme le comprendra l'homme de l'art à la lecture de ce qui précède, il serait également possible d'utiliser les couples (maître, esclave) suivants :

$\{Zrel, A_r\}$, $\{A_c, Zrel\}$ et $\{A_r, A_c\}$.

Par ailleurs, au lieu de confirmer $Z_r$ et la première observation (capteur), le second capteur peut être associé à un seul filtre pour estimer les grandeurs *Zc* et *Zr*.

Le procédé peut recevoir de multiples applications et notamment être utilisé pour permettre la détermination de la commande des organes de suspension, la détermination de l'inclinaison instantanée du châssis d'un véhicule, ou encore la détermination des inégalités de la voie de circulation de ce véhicule.

De plus, dans la mesure où il exploite les propriétés du filtrage de Kalman, qui permet de prendre en compte les erreurs de modélisation, le procédé de l'invention peut être appliqué à la détermination de paramètres susceptibles d'évolution, par exemple à la surveillance du gonflage d'une roue d'un véhicule, à la surveillance de la masse véhicule ou encore à la surveillance des paramètres d'une suspension.

**Revendications**

1. Procédé pour évaluer la fréquence instantanée d'une excitation mécanique exercée, par des inégalités (Zs) d'une voie de circulation (2), sur une roue (1) d'un véhicule automobile circulant sur cette voie et doté d'un châssis (3) relié à la roue par des organes de suspension (4, 5), ce procédé incluant une procédure d'acquisition (ACQ) comprenant l'élaboration d'au moins une première séquence temporelle de mesure (Zrel; Ac; Ar), constituée par des échantillons de mesure successifs représentant des valeurs successives prises par un premier paramètre observable (Zrel; Ac; Ar) lié à l'altitude instantanée du châssis et / ou de la roue, **caractérisé en ce qu'**il comprend en outre :

   - une procédure de filtrage (FILT) utilisant au moins la première séquence temporelle de mesure (Zrel; Ac) pour produire au moins une première séquence temporelle principale dérivée (*Zc*), constituée par des estimations successives (*Zc*) de l'altitude instantanée (Zc) du châssis, et une deuxième séquence temporelle principale dérivée (*Zr*), constituée par des estimations successives (*Zr*) de l'altitude instantanée (Zr) de la roue,
   - une procédure d'extraction de décalage temporel (DECAL), utilisant au moins les première et deuxième séquences principales dérivées (*Zc*; *Zr*) pour produire une séquence temporelle préparatoire (D; $D_e$. $t_e$), constituée par des valeurs estimées successives d'un décalage temporel instantané entre l'altitude instantanée du châssis (Zc) et l'altitude instantanée de la roue (Zr), chaque valeur estimée du décalage temporel étant obtenue par optimisation d'au moins une fonction de corrélation des première et deuxième séquences temporelles principales dérivées (*Zc*; *Zr*), et
   - une procédure d'estimation de fréquence (ESTIM), utilisant la séquence temporelle préparatoire (D; $D_e$. $t_e$) pour produire une séquence temporelle finale (f), constituée par des valeurs estimées successives de la fréquence instantanée de l'excitation mécanique, chaque valeur de fréquence étant obtenue, dans une fenêtre temporelle d'observation définie par la valeur estimée correspondante du décalage temporel instantané (D; $D_e$. $t_e$), comme la fréquence pour laquelle ce décalage temporel instantané (D; $D_e$. $t_e$) constitue un déphasage instantané ($\varphi$).

2. Procédé suivant la revendication 1, **caractérisé en ce que** la procédure de filtrage utilise au moins la première séquence temporelle de mesure (Zrel; Ac; Ar) pour produire une première séquence temporelle dérivée (Zc, Pc) comprenant, en plus de la première séquence temporelle principale dérivée (*Zc*), une première séquence temporelle auxiliaire dérivée (Pc) constituée par des valeurs de variance successives (Pc) respectivement associées aux estimations de la première séquence temporelle principale dérivée, et une deuxième séquence temporelle dérivée (*Zr*, Pr) comprenant, en plus de la deuxième séquence temporelle principale dérivée (*Zr*), une deuxième séquence temporelle auxiliaire dérivée (Pr) constituée par des valeurs de variance successives (Pr) respectivement associées aux estimations de la deuxième séquence temporelle principale dérivée, et **en ce que** chaque valeur estimée du décalage temporel (D; $D_e$. $t_e$) est obtenue par optimisation d'au moins une fonction de corrélation des première et deuxième séquences temporelles dérivées (*Zc*, Pc; *Zr*, Pr).

3. Procédé suivant l'une quelconque des revendications précédentes, **caractérisé en ce que** certains au moins des échantillons de mesure élaborés au cours de la procédure d'acquisition et relatifs à un paramètre observable représentent un débattement relatif (Zr-Zc) du châssis par rapport à la roue.

4. Procédé suivant l'une quelconque des revendications précédentes, **caractérisé en ce que** certains au moins des échantillons de mesure élaborés au cours de la procédure d'acquisition et relatifs à un paramètre observable représentent une accélération instantanée (Ac) du châssis.

5. Procédé suivant l'une quelconque des revendications précédentes, **caractérisé en ce que** certains au moins des échantillons de mesure élaborés au cours de la procédure d'acquisition et relatifs à un paramètre observable représentent une accélération instantanée (Ar) de la roue.

6. Procédé suivant l'une quelconque des revendications précédentes, **caractérisé en ce que** la procédure d'acquisition (ACQ) comprend l'élaboration d'au moins une deuxième séquence temporelle de mesure (Ac; Zrel ; Ar), constituée par des échantillons de mesure successifs représentant des valeurs successives prises par un second paramètre observable (Ac; Zrel; Ar) lié à l'altitude instantanée du châssis et / ou de la roue,

7. Procédé suivant l'une quelconque des revendications précédentes, **caractérisé en ce qu'**il comprend une procédure préalable de modélisation (MOD) comprenant, pour un modèle physique associé au système constitué par la roue, les organes de suspension et le châssis, l'élaboration d'une première fonction de transfert inverse ($H_5(p)$; $H_{12}(p)$; $H_{13}(p)$) prenant le premier paramètre observable (Zrel; Ac; Ar) pour signal d'entrée et l'altitude instantanée du châssis (Zc) pour signal de sortie, et l'élaboration d'une deuxième fonction de transfert inverse ($H_8(p)$; $H_9(p)$; $H_{14}(p)$) prenant le premier paramètre observable (Zrel; Ac; Ar) pour signal d'entrée et l'altitude instantanée de la roue (Zr) pour signal de sortie.

8. Procédé suivant les revendications 6 et 7, **caractérisé en ce que** la procédure préalable de modélisation (MOD) comprend, pour le modèle physique associé au système constitué par la roue, les organes de suspension et le châssis, l'élaboration d'une troisième fonction de transfert inverse ($H_{12}(p)$; $H_{13}(p)$) prenant le second paramètre observable (Ac; Ar) pour signal d'entrée et l'altitude instantanée du châssis (Zc) pour signal de sortie, et l'élaboration d'une quatrième fonction de transfert inverse ($H_9(p)$; $H_{14}(p)$) prenant le second paramètre observable (Ac; Ar) pour signal d'entrée et l'altitude instantanée de la roue (Zr) pour signal de sortie.

9. Procédé suivant les revendications 6 et 7, **caractérisé en ce que** la procédure préalable de modélisation (MOD) comprend, pour le modèle physique associé au système constitué par la roue, les organes de suspension et le châssis, l'élaboration d'une cinquième fonction de transfert inverse ($H_9(p)$; $H_8(p)$; $H_{14}(p)$) prenant le second paramètre observable (Ac; Zrel; Ar) pour signal d'entrée et l'altitude instantanée (Zr) du châssis ou de la roue pour signal de sortie, et l'élaboration d'une sixième fonction de transfert inverse ($H_6(p)$; $H^{-1}_{11}(p)$; $H_4(p)$) prenant le second paramètre observable (Ac; Zrel; Ar) pour signal d'entrée et le premier paramètre observable (Zrel; Ar; Ac) pour signal de sortie.

10. Procédé suivant l'une quelconque des revendications 7 à 9, **caractérisé en ce que** la procédure de filtrage est réalisée au moyen d'au moins un filtre de Kalman (FK5).

**11.** Procédé suivant l'une quelconque des revendications 7 et 8, **caractérisé en ce que** la procédure de filtrage est réalisée au moyen d'au moins deux filtres de Kalman (FK1, FK2; FK3, FK4).

**12.** Procédé suivant l'une quelconque des revendications précédentes combinée à la revendication 2, **caractérisé en ce que** chaque fonction de corrélation des première et deuxième séquences temporelles dérivées (*Zc*, Pc; *Zr*, Pr) est constituée par une fonction d'inter-corrélation de ces première et deuxième séquences temporelles dérivées.

**13.** Procédé suivant la revendication 12, **caractérisé en ce que** chaque fonction de corrélation des première et deuxième séquences temporelles dérivées (*Zc*, Pc; *Zr*, Pr) est construite suivant un modèle de cumulants d'ordre 3.

**14.** Procédé suivant l'une quelconque des revendications 7 à 9, **caractérisé en ce que** la procédure d'estimation de fréquence (ESTIM) élabore chaque valeur de la séquence temporelle finale (f) en tant que solution, pour la valeur estimée correspondante du déphasage instantané, d'au moins une équation représentant le modèle physique associé au système constitué par la roue, les organes de suspension et le châssis.

**15.** Procédé suivant l'une quelconque des revendications 7 à 9, **caractérisé en ce que** la procédure d'estimation de fréquence (ESTIM) élabore chaque valeur de la séquence temporelle finale par application d'une transformée de Wigner-Ville (TWV) ou d'une pseudo-transformée de Wigner-Ville.

**16.** Application d'un procédé suivant l'une quelconque des revendications 1 à 15 à la commande des organes de suspension (4, 5).

**17.** Application d'un procédé suivant l'une quelconque des revendications 1 à 15 à la détermination de l'inclinaison instantanée du châssis (3).

**18.** Application d'un procédé suivant l'une quelconque des revendications 1 à 15 à la détermination des inégalités de la voie de circulation (2).

**19.** Application d'un procédé suivant l'une quelconque des revendications 1 à 15 à la surveillance du gonflage de la roue (1).

**20.** Application d'un procédé suivant l'une quelconque des revendications 1 à 15 à la surveillance de la masse véhicule (3).

**21.** Application d'un procédé suivant l'une quelconque des revendications 1 à 15 à la surveillance des organes de suspension (4, 5) du véhicule.

**Patentansprüche**

**1.** Verfahren zum Bestimmen der momentanen Frequenz einer mechanischen Erregung, die aufgrund von Unebenheiten (Zs) einer Fahrbahn (2) auf ein Rad (19 eines Kraftfahrzeugs ausgeübt wird, das auf dieser Fahrbahn fährt und ein Fahrgestell (3) aufweist, das mit dem Rad über Aufhängungsorgane (4, 5) verbunden ist, wobei dieses Verfahren einen Erfassungsprozess (ACQ) umfasst, der die Erstellung zumindest einer ersten zeitlichen Messsequenz (Zrel; Ac, Ar) enthält, die aus aufeinanderfolgenden Messproben besteht, welche aufeinanderfolgende Werte darstellen, die von einem ersten beobachtbaren Parameter (Zrel; Ac; Ar) aufgenommen wurden, der mit der momentanen Höhe des Fahrgestelles und/oder des Rades verbunden ist, **dadurch gekennzeichnet, dass** es ferner umfasst:

- einen Filterprozess (FILT), bei dem zumindest die erste zeitliche Messsequenz (Zrel; Ac) Anwendung findet, um zumindest eine erste abgeleitete zeitliche Hauptsequenz (*Zc*) zu erzeugen, die aus aufeinanderfolgenden Schätzungen (*Zc*) der momentanen Höhe (Zc) des Fahrgestells besteht, sowie eine zweite abgeleitete zeitliche Hauptsequenz (*Zr*), die aus aufeinanderfolgenden Schätzungen (*Zr*) der momentanen Höhe (Zr) des Rades besteht,

- einen Prozess zur Extraktion der zeitlichen Verschiebung (DECAL), bei dem zumindest die erste und die zweite abgeleitete Hauptsequenz (*Zc*;*Zr*) Anwendung finden, um eine zeitliche Einleitungssequenz (D; $D_e \cdot t_e$) zu erzeugen, die aus aufeinanderfolgenden Schätzwerten einer momentanen zeitlichen Verschiebung zwischen der momentanen Höhe des Fahrgestells (Zc) und der momentanen Höhe der Rades (Zr) besteht, wobei jeder Schätzwert der zeitlichen Verschiebung durch Optimierung zumindest einer Korrelationsfunktion der ersten und der zweiten abgeleiteten zeitlichen Hauptsequenz (*Zc*;*Zr*) erhalten wird, und

- einen Frequenzschätzprozess (ESTIM), bei dem die zeitliche Einleitungssequenz (D; $D_e$. $t_e$) Anwendung findet, um eine zeitliche Endsequenz (f) zu erzeugen, die aus aufeinanderfolgenden Schätzwerten der momentanen Frequenz der mechanischen Erregung besteht, wobei jeder Frequenzwert in einem definierten Beobachtungszeitfenster, das von dem entsprechenden Schätzwert der momentanen zeitlichen Verschiebung (D; $D_e$. $t_e$) definiert wird, als Frequenz erhalten wird, bei der diese momentane zeitliche Verschiebung (D; $D_e$. $t_e$) eine momentane Phasenverschiebung ($\varphi$) bildet.

2. Verfahren nach Anspruch 1, **dadurch gekennzeichnet, dass** bei dem Filterprozess zumindest die erste zeitliche Messsequenz (Zrel; ;Ac, Ar) Anwendung findet, um eine erste abgeleitete zeitliche Sequenz (*Zc*;*Pc*) zu erzeugen, die neben der ersten abgeleiteten zeitlichen Hauptsequenz (*Zc*) eine erste abgeleitete zeitliche Nebensequenz (Pc) enthält, die aus aufeinanderfolgenden Varianzwerten (Pc) besteht, die den jeweiligen Schätzungen der ersten abgeleiteten zeitlichen Hauptsequenz zugeordnet sind, sowie eine zweite abgeleitete zeitliche Sequenz (*Zr*;Pr), die neben der zweiten abgeleiteten zeitlichen Hauptsequenz (*Zr*) eine zweite abgeleitete zeitliche Nebensequenz (Pr) enthält, die aus aufeinanderfolgenden Varianzwerten (Pr) besteht, die den jeweiligen Schätzungen der zweiten abgeleiteten zeitlichen Hauptsequenz zugeordnet sind, und dass jeder Schätzwert der zeitlichen Verschiebung (D; $D_e$. $t_e$) durch Optimierung zumindest einer Korrelationsfunktion der ersten und der zweiten abgeleiteten zeitlichen Sequenz (*Zc*;*Pc*;*Zr*,Pr) erhalten wird.

3. Verfahren nach einem der vorangehenden Ansprüche, **dadurch gekennzeichnet, dass** zumindest bestimmte der Messproben, die im Laufe des Erfassungsprozesses erstellt werden und sich auf einen beobachtbaren Parameter beziehen, eine relative Ein-/Ausfederung (Zr-Zc) des Fahrgestells bezüglich des Rades darstellen.

4. Verfahren nach einem der vorangehenden Ansprüche, **dadurch gekennzeichnet, dass** zumindest bestimmte der Messproben, die im Laufe des Erfassungsprozesses erstellt werden und sich auf einen beobachtbaren Parameter beziehen, eine momentane Beschleunigung (Ac) des Fahrgestells darstellen.

5. Verfahren nach einem der vorangehenden Ansprüche, **dadurch gekennzeichnet, dass** zumindest bestimmte der Messproben, die im Laufe des Erfassungsprozesses erstellt werden und sich auf einen beobachtbaren Parameter beziehen, eine momentane Beschleunigung (Ar) des Rades darstellen.

6. Verfahren nach einem der vorangehenden Ansprüche, **dadurch gekennzeichnet, dass** der Erfassungsprozess (ACQ) die Erstellung zumindest einer zweiten zeitlichen Messsequenz (Ac; Zrel; Ar) umfasst, die aus aufeinanderfolgenden Messproben besteht, welche aufeinanderfolgende Werte darstellen, die von einem zweiten beobachtbaren Parameter (Ac, Zrel; Ar) aufgenommen werden, der mit der momentanen Höhe des Fahrgestelles und/oder des Rades verbunden ist.

7. Verfahren nach einem der vorangehenden Ansprüche, **dadurch gekennzeichnet, dass** es einen Vormodellierungsprozess (MOD) umfasst, der bei einem physischen Modell, das dem aus Rad, Aufhängungsorganen und Fahrgestell bestehenden System zugeordnet ist, die Erstellung einer ersten Umkehrfunktion ($H_5$(p); $H_{12}$(p); $H_{13}$(p)) umfasst, die als Eingangssignal den ersten beobachtbaren Parameter (Zrel; Ac; Ar) und als Ausgangssignal die momentane Höhe des Fahrgestells (Zc) annimmt, sowie die Erstellung einer zweiten Umkehrfunktion ($H_8$(p); $H_9$(p); $H_{14}$(p)), die als Eingangssignal den ersten beobachtbaren Parameter (Zrel; Ac; Ar) und als Ausgangssignal die momentane Höhe des Rads (Zr) annimmt.

8. Verfahren nach Anspruch 6 und 7, **dadurch gekennzeichnet, dass** der Vormodellierungsprozess (MOD) bei einem physischen Modell, das dem aus Rad, Aufhängungsorganen und Fahrgestell bestehenden System zugeordnet ist, die Erstellung einer dritten Umkehrfunktion ($H_{12}$(p); $H_{13}$(p)) umfasst, die als Eingangssignal den zweiten beobachtbaren Parameter (Ac; Ar) und als Ausgangssignal die momentane Höhe des Fahrgestells (Zc) annimmt, sowie die Erstellung einer vierten Umkehrfunktion ($H_9$(p); $H_{14}$(p)), die als Eingangssignal den zweiten beobachtbaren Parameter (Ac; Ar) und als Ausgangssignal die momentane Höhe des Rads (Zr) annimmt.

9. Verfahren nach Anspruch 6 und 7, **dadurch gekennzeichnet, dass** der Vormodellierungsprozess (MOD) bei dem physischen Modell, das dem aus Rad, Aufhängungsorganen und Fahrgestell bestehenden System zugeordnet ist, die Erstellung einer fünften Umkehrfunktion ($H_9$(p); $H_8$(p); $H_{14}$(p)) umfasst, die als Eingangssignal den zweiten beobachtbaren Parameter (Ac; Zrel; Ar) und als Ausgangssignal die momentane Höhe (Zr) des Fahrgestells oder des Rades annimmt, sowie die Erstellung einer sechsten Umkehrfunktion ($H_6$(p); $H^{-1}_{11}$(p); $H_4$(p)), die als Eingangs-

signal den zweiten beobachtbaren Parameter (Ac; Zrel; Ar) und als Ausgangssignal den ersten beobachtbaren Parameter (Zrel; Ar; Ac) annimmt.

**10.** Verfahren nach einem der Ansprüche 7 bis 9, **dadurch gekennzeichnet, dass** der Filterprozess mittels zumindest eines Kalmanfilters (FK5) erfolgt.

**11.** Verfahren nach einem der Ansprüche 7 und 8, **dadurch gekennzeichnet, dass** der Filterprozess mittels zumindest zweier Kalmanfilter (FK1, FK2; FK3, FK4) erfolgt.

**12.** Verfahren nach einem der vorangehenden Ansprüche in Kombination mit Anspruch 2, **dadurch gekennzeichnet, dass** jede Korrelationsfunktion der ersten und der zweiten abgeleiteten zeitlichen Sequenz (Zc; Pc; Zr, Pr) aus einer Interkorrelationsfunktion dieser ersten und zweiten abgeleiteten zeitlichen Sequenz besteht.

**13.** Verfahren nach Anspruch 12, **dadurch gekennzeichnet, dass** jede Korrelationsfunktion der ersten und der zweiten abgeleiteten zeitlichen Sequenz (Zc;Pc;Zr,Pr) nach einem Modell von Kumulanten dritter Ordnung aufgebaut ist.

**14.** Verfahren nach einem der Ansprüche 7 bis 9, **dadurch gekennzeichnet, dass** bei dem entsprechenden Schätzwert der momentanen Phasenverschiebung der Frequenzschätzprozess (ESTIM) jeden Wert der zeitlichen Endsequenz (f) als Lösung zumindest einer Gleichung erstellt, welche das physische Modell darstellt, das dem aus Rad, Aufhängungsorganen und Fahrgestell gebildeten System zugeordnet ist.

**15.** Verfahren nach einem der Ansprüche 7 bis 9, **dadurch gekennzeichnet, dass** der Frequenzschätzprozess (ESTIM) jeden Wert der zeitlichen Endsequenz durch Anwenden einer Wigner-Ville-Transformierten (TWV) oder einer Wigner-Ville-Pseudotransformierten erstellt.

**16.** Anwendung eines Verfahrens nach einem der Ansprüche 1 bis 15 bei der Steuerung von Aufhängungsorganen (4, 5).

**17.** Anwendung eines Verfahrens nach einem der Ansprüche 1 bis 15 bei der Bestimmung der momentanen Neigung des Fahrgestells (3).

**18.** Anwendung eines Verfahrens nach einem der Ansprüche 1 bis 15 bei der Bestimmung von Unebenheiten der Fahrbahn (2).

**19.** Anwendung eines Verfahrens nach einem der Ansprüche 1 bis 15 bei der Überwachung des Füllzustands des Rads (1).

**20.** Anwendung eines Verfahrens nach einem der Ansprüche 1 bis 15 bei der Überwachung der Fahrzeugmasse (3).

**21.** Anwendung eines Verfahrens nach einem der Ansprüche 1 bis 15 bei der Überwachung der Aufhängungsorgane (4, 5) des Fahrzeugs.

## Claims

**1.** Method for evaluating the instantaneous frequency of mechanical excitation exerted by unevenness (Zs) in a route (2) on a wheel (1) of a motor vehicle travelling on this route, having a chassis (3) connected to the wheel by suspension devices (4, 5), this method including an acquisition procedure (ACQ), comprising drawing up at least a first measurement time sequence (Zrel; Ac; Ar), made up of the successive measurement samples representing successive values taken from a first observable parameter (Zrel; Ac; Ar) connected to the instantaneous height of the chassis and / or wheel, **characterised by** the fact that it also comprises:

- a filtering procedure (FILT), using at least the first measurement time sequence (Zrel; Ac) to produce at least a first derived main time sequence ($\check{z}c$), made up of the successive estimates ($\check{z}c$) of the instantaneous height (Zc) of the chassis, and a second derived main time sequence ($\check{z}r$), made up of the successive estimates ($\check{z}r$) of the instantaneous height (Zr) of the wheel,
- a time lag extraction procedure (DECL), using at least the first and second derived main sequences ($\check{z}c$; $\check{z}r$)

to produce a preparation time sequence (D; $D_e . t_e$), made up of the successive estimated values of an instantaneous time lag between the instantaneous height of the chassis (Zc) and the instantaneous height of the wheel (Zr), each estimated value of the time lag being obtained by optimisation of at least one correlation function of the first and second derived main time sequences ($\check{Z}c$; $\check{Z}r$), and

- a frequency estimating procedure (ESTIM), using the preparation time sequence (D; $D_e . t_e$) to produce a final time sequence (f), made up of the successive estimated values of the instantaneous frequency of mechanical excitation, each frequency value being obtained, in an observation time window defined by the relevant estimated value of the instantaneous time lag (D; $D_e . t_e$), as the frequency for which this instantaneous time lag (D; $D_e . t_e$) forms an instantaneous phase difference ($\phi$).

2. Method according to claim 1, **characterised by** the fact that the filtering procedure uses at least the first measurement time sequence (Zrel; Ac; Ar) to produce a first derived time sequence ($\check{Z}c$, Pc) comprising, apart from the first derived main time sequence ($\check{Z}c$,) a first derived auxiliary time sequence (Pc), made up of the successive variation values (Pc) associated with the estimates of the first derived main time sequence respectively, and a second derived time sequence ($\check{Z}r$, Pr) comprising, apart from the second derived main time sequence ($\check{Z}r$), a second derived auxiliary time sequence (Pr), made up of the successive variation values (Pr) associated with the estimates of the second derived main time sequence respectively, and by the fact that each estimated value of the time lag (D; $D_e . t_e$) is obtained by optimisation of at least one correlation function of the first and second derived time sequences ($\check{Z}c$, Pc; $\check{Z}r$, Pr).

3. Method according to any one of the previous claims, **characterised by** the fact that at least some of the measurement samples drawn up in the course of the acquisition procedure relating to an observable parameter represent a relative displacement (Zr-Zc) of the chassis in relation to the wheel.

4. Method according to any one of the previous claims, **characterised by** the fact that at least some of the measurement samples drawn up in the course of the acquisition procedure relating to an observable parameter represent an instantaneous acceleration (Ac) of the chassis.

5. Method according to any one of the previous claims, **characterised by** the fact that at least some of the measurement samples drawn up in the course of the acquisition procedure relating to an observable parameter represent an instantaneous acceleration (Ar) of the wheel.

6. Method according to any one of the previous claims, **characterised by** the fact that the acquisition procedure (ACQ) comprises drawing up at least a second measurement time sequence (Ac; Zrel; Ar), made up of the successive measurement samples representing successive values taken from a second observable parameter (Ac; Zrel; Ar) connected to the instantaneous height of the chassis and / or wheel.

7. Method according to any one of the previous claims, **characterised by** the fact that it comprises a prior modelling procedure (MOD) comprising, for a physical model associated with the system made up of the wheel, suspension devices and chassis, drawing up a first inverse transfer function ($H_5(p)$; $H_{12}(p)$; $H_{13}(p)$), taking the first observable parameter (Zrel; Ac; Ar) as the input signal and the instantaneous height of the chassis (Zc) as the output signal, and drawing up a second inverse transfer function ($H_8(p)$; $H_9(p)$; $H_{14}(p)$), taking the first observable parameter (Zrel; Ac; Ar) as the input signal and the instantaneous height of the wheel (Zr) as the output signal.

8. Method according to claims 6 and 7, **characterised by** the fact that the prior modelling procedure (MOD) comprises, for the physical model associated with the system made up of the wheel, suspension devices and chassis, drawing up a third inverse transfer function ($H_{12}(p)$; $H_{13}(p)$), taking the second observable parameter (Ac; Ar) as the input signal and the instantaneous height of the chassis (Zc) as the output signal, and drawing up a fourth inverse transfer function ($H_9(p)$; $H_{14}(p)$, taking the second observable parameter (Ac; Ar) as the input signal and the instantaneous height of the wheel (Zr) as the output signal.

9. Method according to claims 6 and 7, **characterised by** the fact that the prior modelling procedure (MOD) comprises, for the physical model associated with the system made up of the wheel, suspension devices and chassis, drawing up a fifth inverse transfer function ($H_9(p)$; $H_8(p)$; $H_{14}(p)$), taking the second observable parameter (Ac; Zrel; Ar) as the input signal and the instantaneous height (Zr) of the chassis or wheel as the output signal, and drawing up a sixth inverse transfer function ($H_6(p)$; $H^{-1}_{11}(p)$; $H_4(p)$), taking the second observable parameter (Ac; Zrel; Ar) as the input signal and the first observable parameter (Zrel; Ar; Ac) as the output signal.

10. Method according to any one of claims 7 to 9, **characterised by** the fact that the filtering procedure is carried out by means of at least one Kalman filter (FK5).

11. Method according to any one of claims 7 and 8, **characterised by** the fact that the filtering procedure is carried out by means of a least two Kalman filters (FK1, FK2; FK3, FK4).

12. Method according to any one of the previous claims combined with claim 2, **characterised by** the fact that each correlation function of the first and second derived time sequences ($\check{z}c$, Pc; $\check{z}r$, Pr) is made up of an intercorrelation function of these first and second derived time sequences.

13. Method according to claim 12, **characterised by** the fact that the correlation function of the first and second derived time sequences ($\check{z}c$, Pc; $\check{z}r$, Pr) is made according to a cumulative model of the order of 3.

14. Method according to any one of claims 7 to 9, **characterised by** the fact that the frequency estimating procedure (ESTIM) draws up each value of the final time sequence (f) as a solution, for the relevant estimated value of the instantaneous phase difference, of at least one equation representing the physical model associated with the system made up of the wheel, suspension devices and chassis.

15. Method according to any one of claims 7 to 9, **characterised by** the fact that the frequency estimating procedure (ESTIM) draws up each value of the final time sequence by applying a Wigner-Ville transform (TWV) or a pseudo Wigner-Ville transform.

16. Application of a method according to any one of claims 1 to 15 for controlling the suspension devices (4, 5).

17. Application of a method according to any one of claims 1 to 15 for determining the instantaneous slope of the chassis (3).

18. Application of a method according to any one of claims 1 to 15 for determining the unevenness of the route (2).

19. Application of a method according to any one of claims 1 to 15 for monitoring the inflation of the wheel (1).

20. Application of a method according to any one of claims 1 to 15 for monitoring the vehicle mass (3).

21. Application of a method according to any one of claims 1 to 15 for monitoring the suspension devices (4, 5) of the vehicle.

_Fig 1_

_Fig. 2_

_Fig. 3_

Fig 4A

Fig. 4 B

Fig. 4 C

FIG 5 A

FIG 5 B

Fig 5 C

ACQ

.ACQ.1.    .ACQ.2.

Zrel(t)    Ac(t)

FILT

.FK 5.
H5(p), H8(p); H9(p), H6(p)

$\hat{Z}c$, Pc    $\hat{Z}r$, Pr

DECAL

D
De.te

ESTIM

.TRIGO.    .TWV.

f

*Fig. 6A*

ACQ

.ACQ.1.

.ACQ.2.

$Ar(t)$

$Z\,rel(t)$

FILT

.FK5.

$H13(p), H14(p); H8(p), H11\overset{-1}{(p)}$

$\hat{Z}c, Pc$

$\hat{Z}r, Pr$

DECAL

$D$
$De.te$

ESTIM

.TRIGO.

.TWV.

$f$

FIG.6B

Fig.6 C